# EUROPEAN PATENT SPECIFICATION

(11) **EP 3 605 488 B1**
(45) Date of publication and mention of the grant of the patent: **11.12.2024**
(21) Application number: 19187197.9
(22) Date of filing: 19.07.2019
(51) Int. Cl.: G08G 1/00, G08G 1/01, G08G 1/005, G06Q 10/02, G06Q 10/04, G06Q 10/047, G06Q 50/40, G01C 21/34, G08G 1/0968, H04W 4/02, H04W 4/40

(54) **MANAGEMENT OF MULTIPLE AUTONOMOUS VEHICLES**
VERWALTUNG MEHRERER AUTONOMER FAHRZEUGE
GESTION DE PLUSIEURS VÉHICULES AUTONOMES

(30) Priority: 02.08.2018 US 201862713949 P; 19.10.2018 DK PA201870686
(43) Date of publication of application: 05.02.2020
(73) Proprietor: Motional AD LLC, Boston, MA 02210 (US)
(72) Inventor: MARCZUK, Katarzyna Anna, 589483 Singapore (SG); ALBERT, Marc Lars Ljungdahl, Singapore 158741 (SG); SPEISER, Kevin, Cambridge MA 02140 (US)
(74) Representative: Fish & Richardson P.C.

(56) References cited:
- US-A1- 2016 209 220
- US-A1- 2018 202 822
- US-A1- 2018 209 806

## Description

### Field of The Invention

This description relates to a computer system for controlling the operation of multiple autonomous vehicles.

### Background

Autonomous vehicles can be used to transport people and/or cargo (e.g., packages, objects, or other items) from one location to another. As an example, an autonomous vehicle can navigate to the location of a person, wait for the person to board the autonomous vehicle, and navigate to a specified destination (e.g., a location selected by the person). As another example, an autonomous vehicle can navigate to the location of cargo, wait for the cargo to be loaded into the autonomous vehicle, and navigate to a specified destination (e.g., a delivery location for the cargo).
US 2018/202822 describes a method for managing autonomous vehicle.
US 2018/209806 describes a system for a method for route planning based on environmental conditions.
US 2016/209220 describes a method for anticipatory deployment of autonomously controlled vehicles.

### Summary

The invention is defined in the appended claims. A computer system can control the operation of a fleet of autonomous vehicles. For example, a computer system can deploy autonomous vehicles to one or more locations or regions, assign transportation tasks to each of the autonomous vehicles (e.g., pick up and transport passengers, pick up and transport cargo, etc.), assign maintenance tasks to each of the autonomous vehicles (e.g., charge their batteries at charging stations, receive repairs at a service station, etc.), and/or assign other tasks to each of the autonomous vehicles. The computer system can include one or more devices on a communications network (e.g., a centralized network, peer-to-peer network, decentralized network, etc.). In some embodiments, the computer system is a centralized computer system.

In an aspect, a computer system receives vehicle telemetry data. The vehicle telemetry data indicates a respective geographical location of each autonomous vehicle of a plurality of autonomous vehicles. The computer system also receives user profile data. The user profile data indicates a respective geographical location of each user of a plurality of users. The computer system estimates, based on the user profile data, one or more future requests by one or more of the users for use of one or more of the autonomous vehicles. Each estimated future request is associated with a respective geographical location and a respective time. The computer system transmits one or more command signals to one or more of the autonomous vehicles based on the one or more estimated future requests. Each command signal includes instructions for a respective autonomous vehicle to navigate to a respective geographical location at a respective time.

Implementations of this aspect can include one or more of the following features.

In some embodiments, the vehicle telemetry data includes an indication of a speed of an autonomous vehicle of the plurality of autonomous vehicles.

In some embodiments, the vehicle telemetry data includes an indication of a location of an autonomous vehicle of the plurality of autonomous vehicles.

In some embodiments, the vehicle telemetry data includes an indication of a heading of an autonomous vehicle of the plurality of autonomous vehicles

In some embodiments, the vehicle telemetry data includes an indication of a route of an autonomous vehicle of the plurality of autonomous vehicles.

In some embodiments, the user profile data includes an indication of a location of a user of the plurality of users.

In some embodiments, the user profile data includes an indication of a travel history of a user of the plurality of users.

In some embodiments, the user profile data includes one or more demographic indicators of a user of the plurality of users.

In some embodiments, the user profile data includes an indication of a preference of a user of the plurality of users.

In some embodiments, the user profile data includes an indication of a trend associated with a user of the plurality of users.

In some embodiments, the one or more command signals include instructions to an autonomous vehicle of the plurality of autonomous vehicles to navigate to a location associated with a user of the plurality of users.

In some embodiments, the one or more command signals include instructions to an autonomous vehicle of the plurality of autonomous vehicles to navigate to an idling location.

In some embodiments, the one or more command signals include instructions to an autonomous vehicle of the plurality of autonomous vehicles to navigate to a geographical region different from a current geographical region of the autonomous vehicle.

In some embodiments, the one or more command signals include instructions to an autonomous vehicle of the plurality of autonomous vehicles to navigate to a location associated with a package.

In some embodiments, the one or more command signals include instructions to an autonomous vehicle of the plurality of autonomous vehicles to navigate to a location associated with an electrical charging station.

In some embodiments, the one or more future requests are estimated based on a predictive model of a future demand for use of one or more of the autonomous vehicles.

In some embodiments, the one or more future requests are estimated based on event information indicating an occurrence or predicted occurrence of one or more events.

In some embodiments, the one or more future requests are estimated based on a current demand for use of one or more of the autonomous vehicles.

In some embodiments, the one or more command signals include instructions for a first autonomous vehicle to convey a first user along a first portion of a route to a destination requested by the first user. Further, the computer system transmits instructions to the first user to navigate a second portion of the route using a public transportation system. In some embodiments a travel itinerary is generated for the first user. Travel itinerary includes instructions to the first user to navigate the first portion of the route using the first autonomous vehicle, and instructions to the first user to navigate the second portion of the route using the public transportation system.

In some embodiments, the one or more command signals include instructions to a first autonomous vehicle to idle at a first location. Further, the computer system receives a request by a first user for use of the first autonomous vehicle at the first location, and responsive to receiving the request by the first user, assigns the first autonomous vehicle to the first user.

In some embodiments, the computer system receives a request by a first user for use of an autonomous vehicle, The computer system estimates a first length of time associated with assigning a first autonomous vehicle of the plurality of autonomous vehicles for exclusive use of the first user and fulfilling the request using the first autonomous vehicle, and estimates a second length of time associated with assigning a second autonomous vehicle of the plurality of autonomous vehicles for shared use between the first user and one or more additional users and fulfilling the request using the second autonomous vehicle. The computer system transmits an indication of the first length of time and the second length of time to the user. In some embodiments, the computer system receives an input from the first user selecting one of the first autonomous vehicle or the second autonomous vehicle. Responsive to receiving the input from the first user, the computer system assigns the selected first autonomous vehicle or second autonomous vehicle to fulfill the request.

In some embodiments, the computer system determines that a first autonomous vehicle is conveying a first user to a first destination requested by the first user, and determines that navigating to a second destination different from the first destination increases an efficiency of an operation of the first autonomous vehicle. The computer system transmits an indication of the second destination for display to the first user, and receives an input by the first user accepting the second destination, Responsive to receiving the input by the first user, the computer system transmits, to the first autonomous vehicle, one or more command signals instructing the first autonomous vehicle to navigate to the second destination instead of the first destination.

This aspect further comprises that the computer system receives a request from a first user for a first autonomous vehicle. The request includes an indication of a first location of the first user. The computer system determines that picking up the user at a second location different from the first location increases an efficiency of an operation of the first autonomous vehicle. In accordance with the determination, the computer system transmits, to the first user, an indication of the second location. The computer system receives, from the first user, an input by the first user accepting the second location. In response to receiving the input by the first user, the computer system transmits, to the first autonomous vehicle, one or more command signals instructing the first autonomous vehicle to navigate to the second location instead of the first location, and transmits, to the first user, an instruction to navigate to the second location for pickup by the first autonomous vehicle.

In some embodiments, the computer system receives a first request from a first user for use of one of the autonomous vehicles. The first request is associated with a first priority metric. The computer system receives a second request from a second user for use of one of the autonomous vehicles. The second request is associated with a second priority metric. The computer system determines that the first priority metric is greater than the second priority metric, and responsive to determining that the first priority metric is greater than the second priority metric, assigns an autonomous vehicle to the first user prior to assigning an autonomous vehicle to the second user.

These and other aspects, features, and implementations can be expressed as methods, apparatus, systems, components, program products, means or steps for performing a function, and in other ways.

These and other aspects, features, and implementations will become apparent from the following descriptions, including the claims.

### Brief Description of the Drawings

FIG. 1 shows an example of an autonomous vehicle having autonomous capability.
FIG. 2 illustrates an exemplary "cloud" computing environment.
FIG. 3 illustrates a computer system.
FIG. 4 shows an example architecture for an autonomous vehicle.
FIG. 5 shows an example of inputs and outputs that may be used by a perception module.
FIG. 6 shows an example of a LiDAR system.
FIG. 7 shows the LiDAR system in operation.
FIG. 8 shows the operation of the LiDAR system in additional detail.
FIG. 9 shows a block diagram of the relationships between inputs and outputs of a planning module.
FIG. 10 shows a directed graph used in path planning.
FIG. 11 shows a block diagram of the inputs and outputs of a control module.
FIG. 12 shows a block diagram of the inputs, outputs, and components of a controller.
FIGS. 13-16 show an example usage of a computer system to control the operation of a fleet of autonomous vehicles in response to user requests.
FIG. 17 shows an example usage of a computer system to route autonomous vehicles also different paths.
FIGS. 18-20 show an example usage of a computer system to predict future demand for use of autonomous vehicles and reposition autonomous vehicles in anticipation of the demand.
FIGS. 21-22 show an example usage of a computer system to route an autonomous vehicle along a roaming path.
FIGS. 23-25 show an example usage of a computer system to route an autonomous vehicle to an idling location.
FIGS. 26-27 show an example usage of a computer system to route an autonomous vehicle to a charging station.
FIGS. 28-29 show an example usage of a computer system to reposition autonomous vehicles between geographical regions based on an estimated demand.
FIGS. 30-33 show an example usage of a computer system modify a pick up location associated with a user request.
FIGS. 34-36 show an example usage of a computer system to modify destination location associated with a user request.
FIGS. 37-38 show an example usage of a computer system to control the operation of an autonomous vehicles in conjunction with one or more other modes of transportation.
FIG. 39 shows an example usage of a computer system to control the operation of multiple fleets of autonomous vehicles.
FIGS. 40-45 are flow chart diagrams showing example processes for controlling the operation of a fleet of autonomous vehicles.

### Detailed Description

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

In the drawings, specific arrangements or orderings of schematic elements, such as those representing devices, modules, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship, or association between or among two or more other schematic elements, the absence of any such connecting elements is not meant to imply that no connection, relationship, or association can exist. In other words, some connections, relationships, or associations between elements are not shown in the drawings so as not to obscure the disclosure. In addition, for ease of illustration, a single connecting element is used to represent multiple connections, relationships or associations between elements. For example, where a connecting element represents a communication of signals, data, or instructions, it should be understood by those skilled in the art that such element represents one or multiple signal paths (e.g., a bus), as may be needed, to affect the communication.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

Several features are described hereafter that can each be used independently of one another or with any combination of other features. However, any individual feature may not address any of the problems discussed above or might only address one of the problems discussed above. Some of the problems discussed above might not be fully addressed by any of the features described herein. Although headings are provided, information related to a particular heading, but not found in the section having that heading, may also be found elsewhere in this description. Embodiments are described herein according to the following outline:
1. General Overview
2. Hardware Overview
3. Autonomous Vehicle Architecture
4. Autonomous Vehicle Inputs
5. Autonomous Vehicle Planning
6. Autonomous Vehicle Control
7. Controlling the Operation of a Fleet of Autonomous Vehicles
8. Example Processes for Controlling the Operation of a Fleet of Autonomous Vehicles

### General Overview

A computer system can control the operation of a fleet of autonomous vehicles. For example, a computer system can deploy autonomous vehicles to one or more locations or regions, assign transportation tasks to each of the autonomous vehicles (e.g., pick up and transport passengers, pick up and transport cargo, etc.), and assign maintenance tasks to each of the autonomous vehicles (e.g., charge their batteries at charging stations, receive repairs at a service station, etc.), and/or assign other tasks to each of the autonomous vehicles. The computer system can include one or more devices on a communications network (e.g., a centralized network, peer-to-peer network, decentralized network, etc.). In some embodiments, the computer system is a centralized computer system.

In some embodiments, a computer system dynamically positions each of the autonomous vehicles based on past, present, or future demand for the autonomous vehicles. For example, the computer system can determine that autonomous vehicles are currently in high demand at a particular location, and direct autonomous vehicles to that location from locations having a lower demand. As another example, the computer system can estimate a future demand for autonomous vehicles (e.g., based on historical and/or current information gathered from the autonomous vehicles, potential passengers, and/or environmental information), and direct autonomous vehicles to certain locations to better meet the estimated demand.

The subject matter described herein can provide several technical benefits. For instance, some implementation can improve the efficiency and effectiveness of a fleet of autonomous vehicles as a whole, as well as autonomous vehicles individually. As an example, by positioning vehicles in locations of anticipated demand, vehicles can fulfill requests more quickly, thereby increasing the effective capacity of the fleet. Further, vehicles spend less time idling without a passenger or cargo, and thus operate more efficiently. Further, vehicles can be deployed in an automated manner (e.g., using computer-specific rules), rather than based on the subjective predictions of a human.

### Hardware Overview

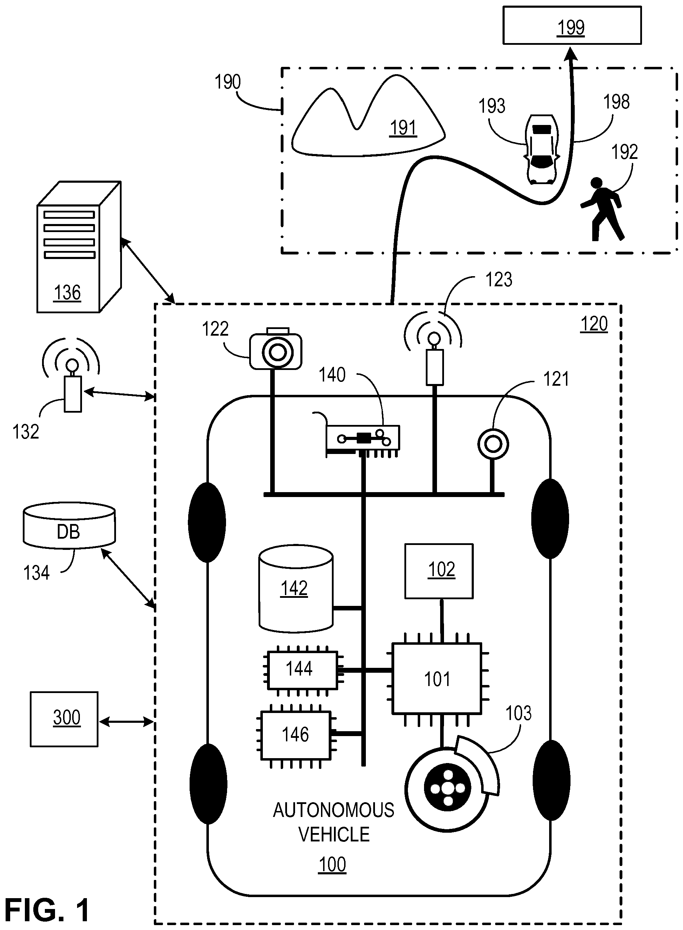

FIG. 1 shows an example of an autonomous vehicle 100 having autonomous capability.

As used herein, the term "autonomous capability" refers to a function, feature, or facility that enables a vehicle to be operated without real-time human intervention unless specifically requested by the vehicle.

As used herein, an autonomous vehicle (AV) is a vehicle that possesses autonomous capability.

As used herein, "vehicle" includes means of transposition of goods or people. For example, cars, buses, trains, airplanes, drones, trucks, boats, ships, submersibles, dirigibles, etc. A driverless car is an example of an AV.

As used herein, "trajectory" refers to a path or route generated by an AV to navigate from a first spatiotemporal location to second spatiotemporal location. In an embodiment, the first spatiotemporal location is referred to as the initial or starting location and the second spatiotemporal location is referred to as the destination, final location, goal, goal position, or goal location. In some examples, a trajectory is made up of one or more segments (e.g., sections of road) and each segment is made up of one or more blocks (e.g., portions of a lane or intersection). In an embodiment, the spatiotemporal locations correspond to real world locations. For example, the spatiotemporal locations are pick up or drop-off locations to pick up or drop-off persons or goods.

As used herein, "sensor" includes one or more physical components that detect information about the environment surrounding the physical components. Some of the physical components can include electronic components such as analog-to-digital converters, a buffer (such as a RAM and/or a nonvolatile storage) as well as data processing components such as an ASIC (application-specific integrated circuit), a microprocessor and/or a microcontroller.

"One or more" includes a function being performed by one element, a function being performed by more than one element, *e.g.*, in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this description, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

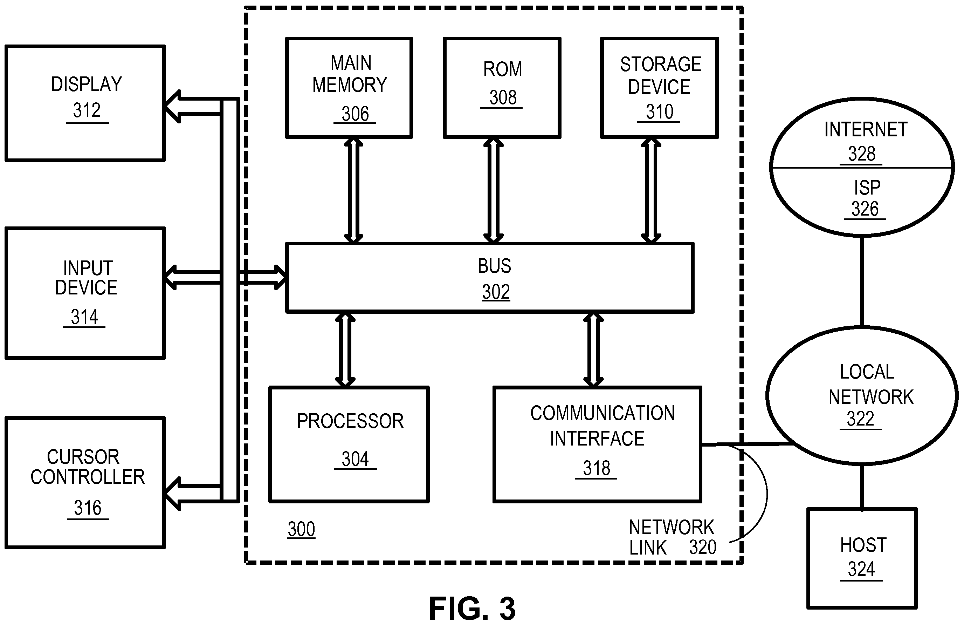

As used herein, an AV system refers to the AV along with the array of hardware, software, stored data, and data generated in real-time that supports the operation of the AV. In an embodiment, the AV system is incorporated within the AV. In an embodiment, the AV system is spread across several locations. For example, some of the software of the AV system is implemented on a cloud computing environment similar to cloud computing environment 300 described below with respect to FIG. 3.

In general, this document describes technologies applicable to any vehicles that have one or more autonomous capabilities including fully autonomous vehicles, highly autonomous vehicles, and conditionally autonomous vehicles, such as so-called Level 5, Level 4 and Level 3 vehicles, respectively (see SAE International's standard J3016: Taxonomy and Definitions for Terms Related to On-Road Motor Vehicle Automated Driving Systems for more details on the classification of levels of autonomy in vehicles). The technologies descried in this document also are also applicable to partially autonomous vehicles and driver assisted vehicles, such as so-called Level 2 and Level 1 vehicles (see SAE International's standard J3016: Taxonomy and Definitions for Terms Related to On-Road Motor Vehicle Automated Driving Systems). In an embodiment, one or more of the Level 1, 2, 3, 4 and 5 vehicle systems may automate certain vehicle operations (e.g., steering, braking, and using maps) under certain operating conditions based on processing of sensor inputs. The technologies described in this document can benefit vehicles in any levels, ranging from fully autonomous vehicles to human-operated vehicles.

Referring to FIG. 1, an AV system 120 operates the AV 100 autonomously or semi-autonomously along a trajectory 198 through an environment 190 to a destination 199 (sometimes referred to as a final location) while avoiding objects (e.g., natural obstructions 191, vehicles 193, pedestrians 192, cyclists, and other obstacles) and obeying rules of the road (e.g., rules of operation or driving preferences).

In an embodiment, the AV system 120 includes devices 101 that are instrumented to receive and act on operational commands from the computer processors 146. In an embodiment, computing processors 146 are similar to the processor 304 described below in reference to FIG. 3. Examples of devices 101 include a steering control 102, brakes 103, gears, accelerator pedal or other acceleration control mechanisms, windshield wipers, side-door locks, window controls, and turn-indicators.

In an embodiment, the AV system 120 includes sensors 121 for measuring or inferring properties of state or condition of the AV 100, such as the AV's position, linear and angular velocity and acceleration, and heading (e.g., an orientation of the leading end of AV 100). Example of sensors 121 are GPS, inertial measurement units (IMU) that measure both vehicle linear accelerations and angular rates, wheel speed sensors for measuring or estimating wheel slip ratios, wheel brake pressure or braking torque sensors, engine torque or wheel torque sensors, and steering angle and angular rate sensors.

In an embodiment, the sensors 121 also include sensors for sensing or measuring properties of the AV's environment. For example, monocular or stereo video cameras 122 in the visible light, infrared or thermal (or both) spectra, LiDAR 123, radar, ultrasonic sensors, time-of-flight (TOF) depth sensors, speed sensors, temperature sensors, humidity sensors, and precipitation sensors.

In an embodiment, the AV system 120 includes a data storage unit 142 and memory 144 for storing machine instructions associated with computer processors 146 or data collected by sensors 121. In an embodiment, the data storage unit 142 is similar to the ROM 308 or storage device 310 described below in relation to FIG. 3. In an embodiment, memory 144 is similar to the main memory 306 described below. In an embodiment, the data storage unit 142 and memory 144 store historical, real-time, and/or predictive information about the environment 190. In an embodiment, the stored information includes maps, driving performance, traffic congestion updates or weather conditions. In an embodiment, data relating to the environment 190 is transmitted to the AV 100 via a communications channel from a remotely located database 134.

In an embodiment, the AV system 120 includes communications devices 140 for communicating measured or inferred properties of other vehicles' states and conditions, such as positions, linear and angular velocities, linear and angular accelerations, and linear and angular headings to the AV 100. These devices include Vehicle-to-Vehicle (V2V) and Vehicle-to-Infrastructure (V2I) communication devices and devices for wireless communications over point-to-point or ad hoc networks or both. In an embodiment, the communications devices 140 communicate across the electromagnetic spectrum (including radio and optical communications) or other media (e.g., air and acoustic media). A combination of Vehicle-to-Vehicle (V2V) Vehicle-to-Infrastructure (V2I) communication (and, in some embodiments, one or more other types of communication) is sometimes referred to as Vehicle-to-Everything (V2X) communication. V2X communication typically conforms to one or more communications standards for communication with, between, and among autonomous vehicles.

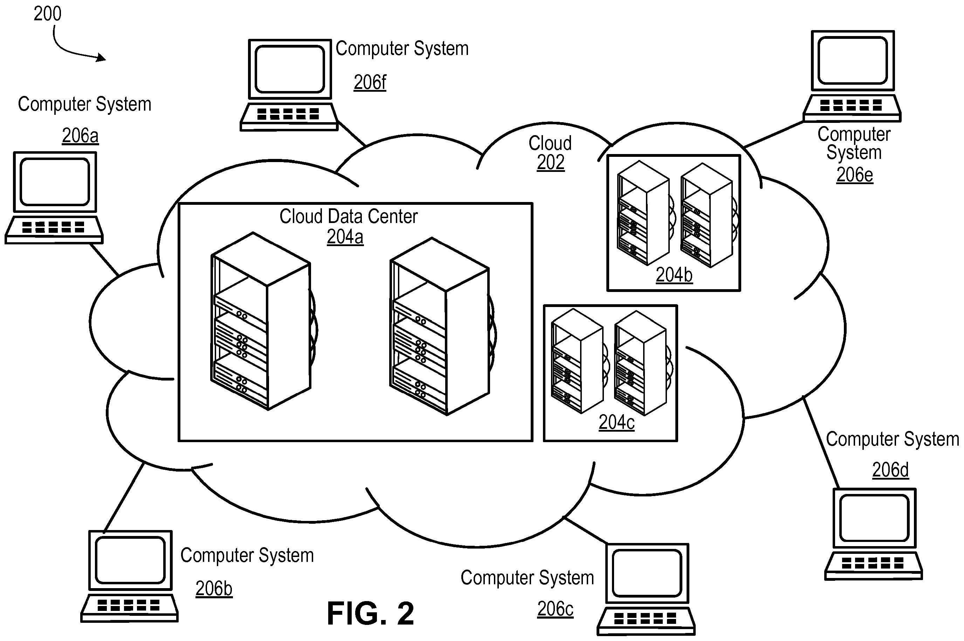

In an embodiment, the communication devices 140 include communication interfaces. For example, wired, wireless, WiMAX, Wi-Fi, Bluetooth, satellite, cellular, optical, near field, infrared, or radio interfaces. The communication interfaces transmit data from a remotely located database 134 to AV system 120. In an embodiment, the remotely located database 134 is embedded in a cloud computing environment 200 as described in FIG. 2. The communication interfaces 140 transmit data collected from sensors 121 or other data related to the operation of AV 100 to the remotely located database 134. In an embodiment, communication interfaces 140 transmit information that relates to teleoperations to the AV 100. In some embodiments, the AV 100 communicates with other remote (e.g., "cloud") servers 136.

In an embodiment, the remotely located database 134 also stores and transmits digital data (e.g., storing data such as road and street locations). Such data is stored on the memory 144 on the AV 100, or transmitted to the AV 100 via a communications channel from the remotely located database 134.

In an embodiment, the remotely located database 134 stores and transmits historical information about driving properties (e.g., speed and acceleration profiles) of vehicles that have previously traveled along trajectory 198 at similar times of day. In one implementation, such data may be stored on the memory 144 on the AV 100, or transmitted to the AV 100 via a communications channel from the remotely located database 134.

Computing devices 146 located on the AV 100 algorithmically generate control actions based on both real-time sensor data and prior information, allowing the AV system 120 to execute its autonomous driving capabilities.

In an embodiment, the AV system 120 includes computer peripherals 132 coupled to computing devices 146 for providing information and alerts to, and receiving input from, a user (e.g., an occupant or a remote user) of the AV 100. In an embodiment, peripherals 132 are similar to the display 312, input device 314, and cursor controller 316 discussed below in reference to FIG. 3. The coupling is wireless or wired. Any two or more of the interface devices may be integrated into a single device.

FIG. 2 illustrates an exemplary "cloud" computing environment. Cloud computing is a model of service delivery for enabling convenient, on-demand network access to a shared pool of configurable computing resources (e.g. networks, network bandwidth, servers, processing, memory, storage, applications, virtual machines, and services). In typical cloud computing systems, one or more large cloud data centers house the machines used to deliver the services provided by the cloud. Referring now to FIG. 2, the cloud computing environment 200 includes cloud data centers 204a, 204b, and 204c that are interconnected through the cloud 202. Data centers 204a, 204b, and 204c provide cloud computing services to computer systems 206a, 206b, 206c, 206d, 206e, and 206f connected to cloud 202.

The cloud computing environment 200 includes one or more cloud data centers. In general, a cloud data center, for example the cloud data center 204a shown in FIG. 2, refers to the physical arrangement of servers that make up a cloud, for example the cloud 202 shown in FIG. 2, or a particular portion of a cloud. For example, servers are physically arranged in the cloud datacenter into rooms, groups, rows, and racks. A cloud datacenter has one or more zones, which include one or more rooms of servers. Each room has one or more rows of servers, and each row includes one or more racks. Each rack includes one or more individual server nodes. In some implementation, servers in zones, rooms, racks, and/or rows are arranged into groups based on physical infrastructure requirements of the datacenter facility, which include power, energy, thermal, heat, and/or other requirements. In an embodiment, the server nodes are similar to the computer system described in FIG. 3. The data center 204a has many computing systems distributed through many racks.

The cloud 202 includes cloud data centers 204a, 204b, and 204c along with the network and networking resources (for example, networking equipment, nodes, routers, switches, and networking cables) that interconnect the cloud data centers 204a, 204b, and 204c and help facilitate the computing systems' 206a-f access to cloud computing services. In an embodiment, the network represents any combination of one or more local networks, wide area networks, or internetworks coupled using wired or wireless links deployed using terrestrial or satellite connections. Data exchanged over the network, is transferred using any number of network layer protocols, such as Internet Protocol (IP), Multiprotocol Label Switching (MPLS), Asynchronous Transfer Mode (ATM), Frame Relay, etc. Furthermore, in embodiments where the network represents a combination of multiple sub-networks, different network layer protocols are used at each of the underlying sub-networks. In some embodiments, the network represents one or more interconnected internetworks, such as the public Internet.

The computing systems 206a-f or cloud computing services consumers are connected to the cloud 202 through network links and network adapters. In an embodiment, the computing systems 206a-f are implemented as various computing devices, for example servers, desktops, laptops, tablet, smartphones, IoT devices, autonomous vehicles (including, cars, drones, shuttles, trains, buses, etc.) and consumer electronics. In an embodiment, the computing systems 206a-f are implemented in or as a part of other systems.

FIG. 3 illustrates a computer system 300. In an implementation, the computer system 300 is a special purpose computing device. The special-purpose computing device is hard-wired to perform the techniques or includes digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. In various embodiments, the special-purpose computing devices are desktop computer systems, portable computer systems, handheld devices, network devices or any other device that incorporates hard-wired and/or program logic to implement the techniques.

In an embodiment, the computer system 300 includes a bus 302 or other communication mechanism for communicating information, and a hardware processor 304 coupled with a bus 302 for processing information. The hardware processor 304 is, for example, a general-purpose microprocessor. The computer system 300 also includes a main memory 306, such as a random-access memory (RAM) or other dynamic storage device, coupled to the bus 302 for storing information and instructions to be executed by processor 304. In one implementation, the main memory 306 is used for storing temporary variables or other intermediate information during execution of instructions to be executed by the processor 304. Such instructions, when stored in non-transitory storage media accessible to the processor 304, render the computer system 300 into a special-purpose machine that is customized to perform the operations specified in the instructions.

In an embodiment, the computer system 300 further includes a read only memory (ROM) 308 or other static storage device coupled to the bus 302 for storing static information and instructions for the processor 304. A storage device 310, such as a magnetic disk, optical disk, solid-state drive, or three-dimensional cross point memory is provided and coupled to the bus 302 for storing information and instructions.

In an embodiment, the computer system 300 is coupled via the bus 302 to a display 312, such as a cathode ray tube (CRT), a liquid crystal display (LCD), plasma display, light emitting diode (LED) display, or an organic light emitting diode (OLED) display for displaying information to a computer user. An input device 314, including alphanumeric and other keys, is coupled to bus 302 for communicating information and command selections to the processor 304. Another type of user input device is a cursor controller 316, such as a mouse, a trackball, a touch-enabled display, or cursor direction keys for communicating direction information and command selections to the processor 304 and for controlling cursor movement on the display 312. This input device typically has two degrees of freedom in two axes, a first axis (e.g., x-axis) and a second axis (e.g., y-axis), that allows the device to specify positions in a plane.

According to one embodiment, the techniques herein are performed by the computer system 300 in response to the processor 304 executing one or more sequences of one or more instructions contained in the main memory 306. Such instructions are read into the main memory 306 from another storage medium, such as the storage device 310. Execution of the sequences of instructions contained in the main memory 306 causes the processor 304 to perform the process steps described herein. In alternative embodiments, hard-wired circuitry is used in place of or in combination with software instructions.

The term "storage media" as used herein refers to any non-transitory media that store data and/or instructions that cause a machine to operate in a specific fashion. Such storage media includes non-volatile media and/or volatile media. Non-volatile media includes, for example, optical disks, magnetic disks, solid-state drives, or three-dimensional cross point memory, such as the storage device 310. Volatile media includes dynamic memory, such as the main memory 306. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NV-RAM, or any other memory chip or cartridge.

Storage media is distinct from but may be used in conjunction with transmission media. Transmission media participates in transferring information between storage media. For example, transmission media includes coaxial cables, copper wire and fiber optics, including the wires that comprise the bus 302. Transmission media can also take the form of acoustic or light waves, such as those generated during radio-wave and infrared data communications.

In an embodiment, various forms of media are involved in carrying one or more sequences of one or more instructions to the processor 304 for execution. For example, the instructions are initially carried on a magnetic disk or solid-state drive of a remote computer. The remote computer loads the instructions into its dynamic memory and send the instructions over a telephone line using a modem. A modem local to the computer system 300 receives the data on the telephone line and use an infrared transmitter to convert the data to an infrared signal. An infrared detector receives the data carried in the infrared signal and appropriate circuitry places the data on the bus 302. The bus 302 carries the data to the main memory 306, from which processor 304 retrieves and executes the instructions. The instructions received by the main memory 306 may optionally be stored on the storage device 310 either before or after execution by processor 304.

The computer system 300 also includes a communication interface 318 coupled to the bus 302. The communication interface 318 provides a two-way data communication coupling to a network link 320 that is connected to a local network 322. For example, the communication interface 318 is an integrated service digital network (ISDN) card, cable modem, satellite modem, or a modem to provide a data communication connection to a corresponding type of telephone line. As another example, the communication interface 318 is a local area network (LAN) card to provide a data communication connection to a compatible LAN. In some implementations, wireless links are also implemented. In any such implementation, the communication interface 318 sends and receives electrical, electromagnetic, or optical signals that carry digital data streams representing various types of information.

The network link 320 typically provides data communication through one or more networks to other data devices. For example, the network link 320 provides a connection through the local network 322 to a host computer 324 or to a cloud data center or equipment operated by an Internet Service Provider (ISP) 326. The ISP 326 in turn provides data communication services through the world-wide packet data communication network now commonly referred to as the "Internet" 328. The local network 322 and Internet 328 both use electrical, electromagnetic or optical signals that carry digital data streams. The signals through the various networks and the signals on the network link 320 and through the communication interface 318, which carry the digital data to and from the computer system 300, are example forms of transmission media. In an embodiment, the network 320 contains the cloud 202 or a part of the cloud 202 described above.

The computer system 300 sends messages and receives data, including program code, through the network(s), the network link 320, and the communication interface 318. In an embodiment, the computer system 300 receives code for processing. The received code is executed by the processor 304 as it is received, and/or stored in storage device 310, or other non-volatile storage for later execution.

### Autonomous Vehicle Architecture

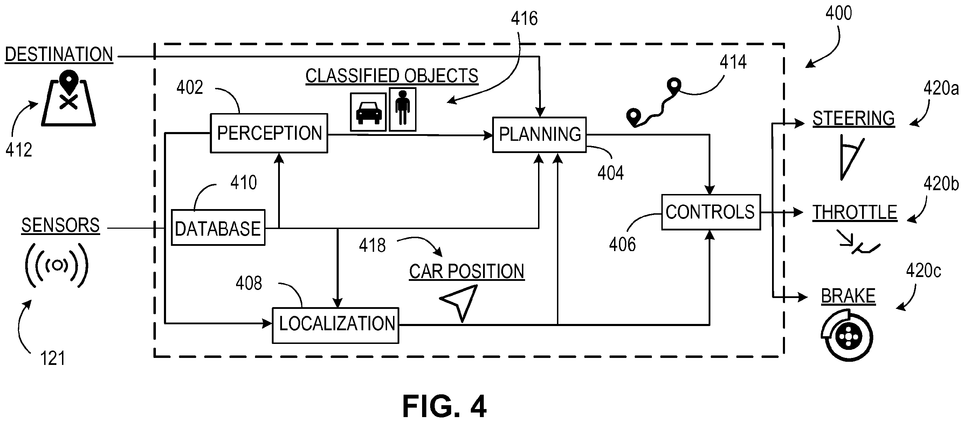

FIG. 4 shows an example architecture 400 for an autonomous vehicle (e.g., the AV 100 shown in FIG. 1). The architecture 400 includes a perception module 402 (sometimes referred to as a perception circuit), a planning module 404 (sometimes referred to as a planning circuit), a control module 406 (sometimes referred to as a control circuit), a localization module 408 (sometimes referred to as a localization circuit), and a database module 410 (sometimes referred to as a database circuit). Each module plays a role in the operation of the AV 100. Together, the modules 402, 404, 406, 408, and 410 may be part of the AV system 120 shown in FIG. 1. In some embodiments, any of the modules 402, 404, 406, 408, and 410 is a combination of computer software and computer hardware.

In use, the planning module 404 receives data representing a destination 412 and determines data representing a trajectory 414 (sometimes referred to as a route) that can be traveled by the AV 100 to reach (e.g., arrive at) the destination 412. In order for the planning module 404 to determine the data representing the trajectory 414, the planning module 404 receives data from the perception module 402, the localization module 408, and the database module 410.

The perception module 402 identifies nearby physical objects using one or more sensors 121, e.g., as also shown in FIG. 1. The objects are classified (e.g., grouped into types such as pedestrian, bicycle, automobile, traffic sign, etc.) and data representing the classified objects 416 is provided to the planning module 404.

The planning module 404 also receives data representing the AV position 418 from the localization module 408. The localization module 408 determines the AV position by using data from the sensors 121 and data from the database module 410 (e.g., a geographic data) to calculate a position. For example, the localization module 408 uses data from a GNSS (Global Navigation Satellite System) sensor and geographic data to calculate a longitude and latitude of the AV. In an embodiment, data used by the localization module 408 includes high-precision maps of the roadway geometric properties, maps describing road network connectivity properties, maps describing roadway physical properties (such as traffic speed, traffic volume, the number of vehicular and cyclist traffic lanes, lane width, lane traffic directions, or lane marker types and locations, or combinations of them), and maps describing the spatial locations of road features such as crosswalks, traffic signs or other travel signals of various types.

The control module 406 receives the data representing the trajectory 414 and the data representing the AV position 418 and operates the control functions 420a-c (e.g., steering, throttling, braking, ignition) of the AV in a manner that will cause the AV 100 to travel the trajectory 414 to the destination 412. For example, if the trajectory 414 includes a left turn, the control module 406 will operate the control functions 420a-c in a manner such that the steering angle of the steering function will cause the AV 100 to turn left and the throttling and braking will cause the AV 100 to pause and wait for passing pedestrians or vehicles before the turn is made.

### Autonomous Vehicle Inputs

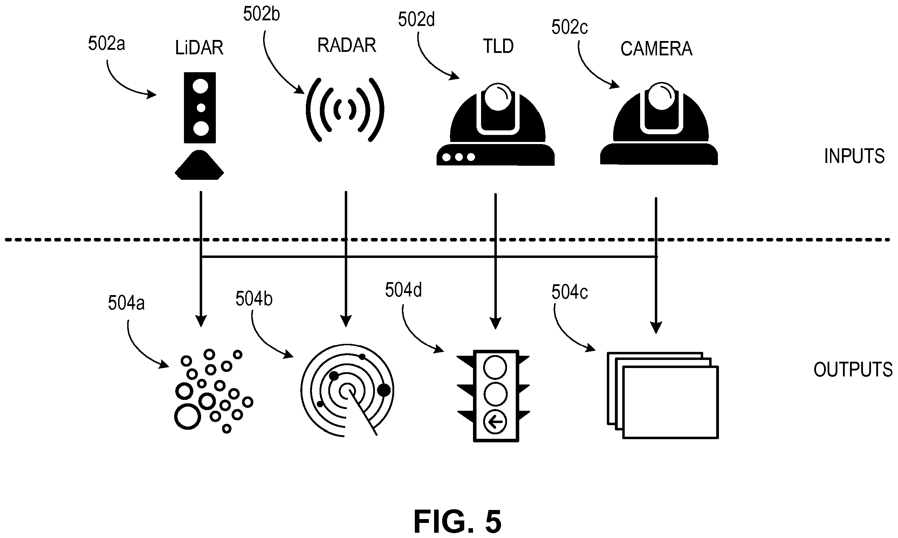

FIG. 5 shows an example of inputs 502a-d (e.g., sensors 121 shown in FIG. 1) and outputs 504a-d (e.g., sensor data) that is used by the perception module 402 (FIG. 4). One input 502a is a LiDAR (Light Detection And Ranging) system (e.g., LiDAR 123 shown in FIG. 1). LiDAR is a technology that uses light (e.g., bursts of light such as infrared light) to obtain data about physical objects in its line of sight. A LiDAR system produces LiDAR data as output 504a. For example, LiDAR data is collections of 3D or 2D points (also known as a point clouds) that are used to construct a representation of the environment 190.

Another input 502b is a radar system. Radar is a technology that uses radio waves to obtain data about nearby physical objects. Radars can obtain data about objects not within the line of sight of a LiDAR system. A radar system 502b produces radar data as output 504b. For example, radar data are one or more radio frequency electromagnetic signals that are used to construct a representation of the environment 190.

Another input 502c is a camera system. A camera system uses one or more cameras (e.g., digital cameras using a light sensor such as a charge-coupled device [CCD]) to obtain information about nearby physical objects. A camera system produces camera data as output 504c. Camera data often takes the form of image data (e.g., data in an image data format such as RAW, JPEG, PNG, etc.). In some examples, the camera system has multiple independent cameras, e.g., for the purpose of stereopsis (stereo vision), which enables the camera system to perceive depth. Although the objects perceived by the camera system are described here as "nearby," this is relative to the AV. In use, the camera system may be configured to "see" objects far, e.g., up to a kilometer or more ahead of the AV. Accordingly, the camera system may have features such as sensors and lenses that are optimized for perceiving objects that are far away.

Another input 502d is a traffic light detection (TLD) system. A TLD system uses one or more cameras to obtain information about traffic lights, street signs, and other physical objects that provide visual navigation information. A TLD system produces TLD data as output 504d. TLD data often takes the form of image data (e.g., data in an image data format such as RAW, JPEG, PNG, etc.). A TLD system differs from a system incorporating a camera in that a TLD system uses a camera with a wide field of view (e.g., using a wide-angle lens or a fish-eye lens) in order to obtain information about as many physical objects providing visual navigation information as possible, so that the AV 100 has access to all relevant navigation information provided by these objects. For example, the viewing angle of the TLD system may be about 120 degrees or more.

In some embodiments, outputs 504a-d are combined using a sensor fusion technique. Thus, either the individual outputs 504a-d are provided to other systems of the AV 100 (e.g., provided to a planning module 404 as shown in FIG. 4), or the combined output can be provided to the other systems, either in the form of a single combined output or multiple combined outputs of the same type (e.g., using the same combination technique or combining the same outputs or both) or different types type (e.g., using different respective combination techniques or combining different respective outputs or both). In some embodiments, an early fusion technique is used. An early fusion technique is characterized by combining outputs before one or more data processing steps are applied to the combined output. In some embodiments, a late fusion technique is used. A late fusion technique is characterized by combining outputs after one or more data processing steps are applied to the individual outputs.

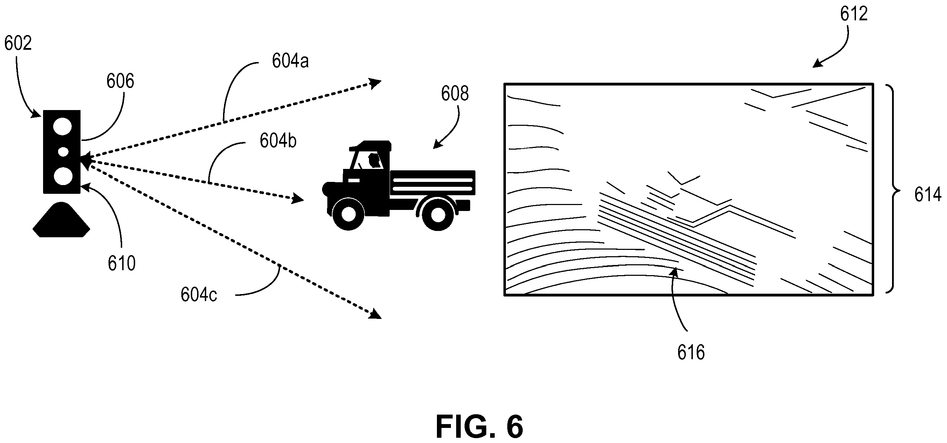

FIG. 6 shows an example of a LiDAR system 602 (e.g., the input 502a shown in FIG. 5). The LiDAR system 602 emits light 604a-c from a light emitter 606 (e.g., a laser transmitter). Light emitted by a LiDAR system is typically not in the visible spectrum; for example, infrared light is often used. Some of the light 604b emitted encounters a physical object 608 (e.g., a vehicle) and reflects back to the LiDAR system 602. (Light emitted from a LiDAR system typically does not penetrate physical objects, e.g., physical objects in solid form.) The LiDAR system 602 also has one or more light detectors 610, which detect the reflected light. In an embodiment, one or more data processing systems associated with the LiDAR system generates an image 612 representing the field of view 614 of the LiDAR system. The image 612 includes information that represents the boundaries 616 of a physical object 608. In this way, the image 612 is used to determine the boundaries 616 of one or more physical objects near an AV.

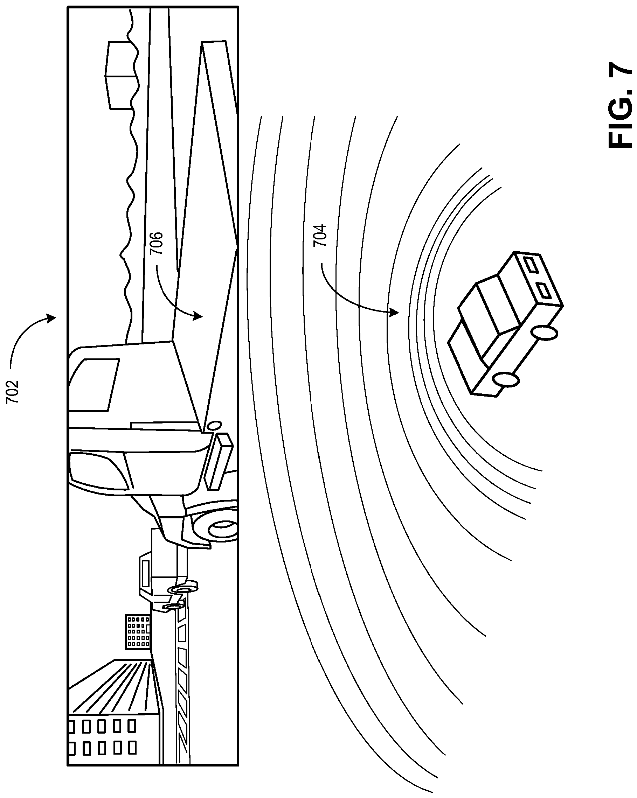

FIG. 7 shows the LiDAR system 602 in operation. In the scenario shown in this figure, the AV 100 receives both camera system output 504c in the form of an image 702 and LiDAR system output 504a in the form of LiDAR data points 704. In use, the data processing systems of the AV 100 compares the image 702 to the data points 704. In particular, a physical object 706 identified in the image 702 is also identified among the data points 704. In this way, the AV 100 perceives the boundaries of the physical object based on the contour and density of the data points 704.

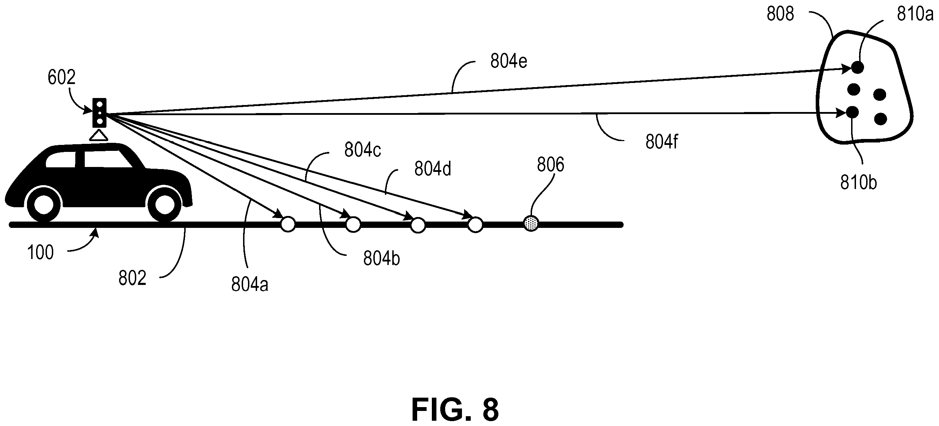

FIG. 8 shows the operation of the LiDAR system 602 in additional detail. As described above, the AV 100 detects the boundary of a physical object based on characteristics of the data points detected by the LiDAR system 602. As shown in FIG. 8, a flat object, such as the ground 802, will reflect light 804a-d emitted from a LiDAR system 602 in a consistent manner. Put another way, because the LiDAR system 602 emits light using consistent spacing, the ground 802 will reflect light back to the LiDAR system 602 with the same consistent spacing. As the AV 100 travels over the ground 802, the LiDAR system 602 will continue to detect light reflected by the next valid ground point 806 if nothing is obstructing the road. However, if an object 808 obstructs the road, light 804e-f emitted by the LiDAR system 602 will be reflected from points 810a-b in a manner inconsistent with the expected consistent manner. From this information, the AV 100 can determine that the object 808 is present.

### Autonomous Vehicle Planning

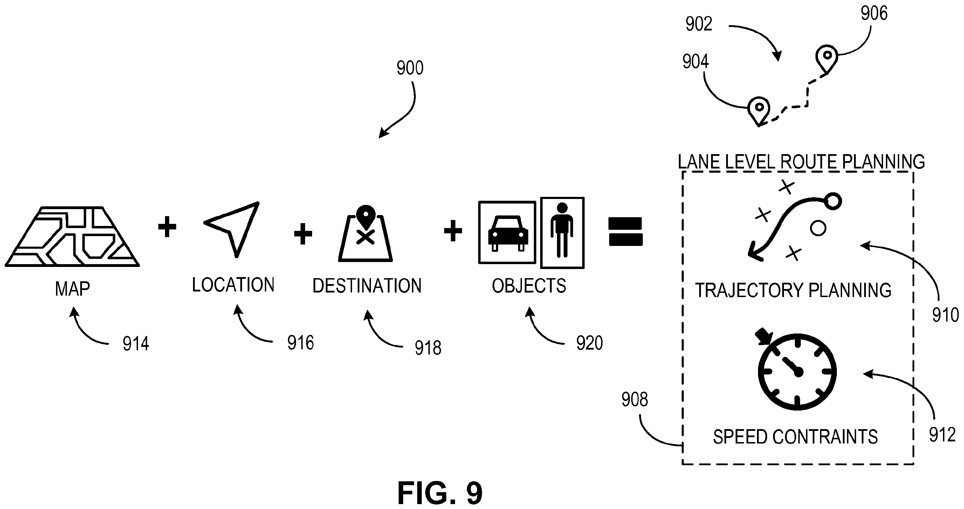

FIG. 9 shows a block diagram 900 of the relationships between inputs and outputs of a planning module 404 (e.g., as shown in FIG. 4). In general, the output of a planning module 404 is a route 902 from a start point 904 (e.g., source location or initial location), and an end point 906 (e.g., destination or final location). The route 902 is typically defined by one or more segments. For example, a segment is a distance to be traveled over at least a portion of a street, road, highway, driveway, or other physical area appropriate for automobile travel. In some examples, e.g., if the AV 100 is an off-road capable vehicle such as a four-wheel-drive (4WD) or all-wheel-drive (AWD) car, SUV, pick-up truck, or the like, the route 902 includes "off-road" segments such as unpaved paths or open fields.

In addition to the route 902, a planning module also outputs lane-level route planning data 908. The lane-level route planning data 908 is used to traverse segments of the route 902 based on conditions of the segment at a particular time. For example, if the route 902 includes a multi-lane highway, the lane-level route planning data 908 includes trajectory planning data 910 that the AV 100 can use to choose a lane among the multiple lanes, e.g., based on whether an exit is approaching, whether one or more of the lanes have other vehicles, or other factors that vary over the course of a few minutes or less. Similarly, in some implementations, the lane-level route planning data 908 includes speed constraints 912 specific to a segment of the route 902. For example, if the segment includes pedestrians or un-expected traffic, the speed constraints 912 may limit the AV 100 to a travel speed slower than an expected speed, e.g., a speed based on speed limit data for the segment.

In an embodiment, the inputs to the planning module 404 includes database data 914 (e.g., from the database module 410 shown in FIG. 4), current location data 916 (e.g., the AV position 418 shown in FIG. 4), destination data 918 (e.g., for the destination 412 shown in FIG. 4), and object data 920 (e.g., the classified objects 416 as perceived by the perception module 402 as shown in FIG. 4). In some embodiments, the database data 914 includes rules used in planning. Rules are specified using a formal language, e.g., using Boolean logic. In any given situation encountered by the AV 100, at least some of the rules will apply to the situation. A rule applies to a given situation if the rule has conditions that are met based on information available to the AV 100, e.g., information about the surrounding environment. Rules can have priority. For example, a rule that says, "if the road is a freeway, move to the leftmost lane" can have a lower priority than "if the exit is approaching within a mile, move to the rightmost lane."

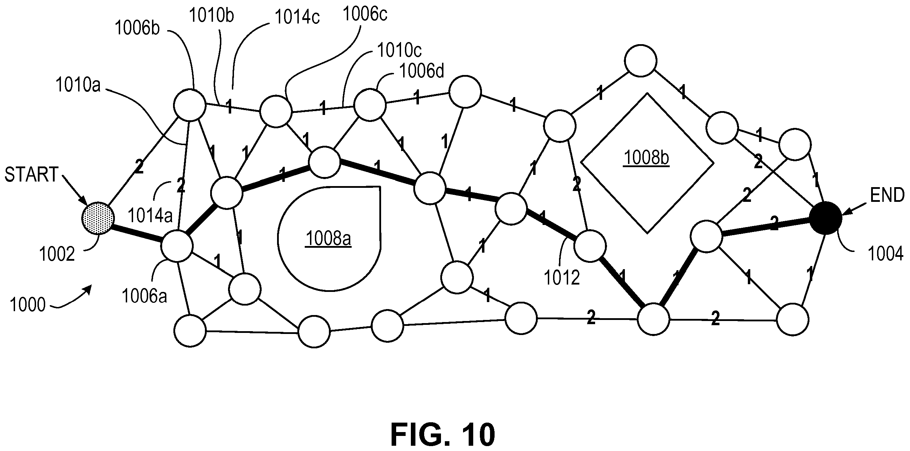

FIG. 10 shows a directed graph 1000 used in path planning, e.g., by the planning module 404 (FIG. 4). In general, a directed graph 1000 like the one shown in FIG. 10 is used to determine a path between any start point 1002 and end point 1004. In real-world terms, the distance separating the start point 1002 and end point 1004 may be relatively large (e.g., in two different metropolitan areas) or may be relatively small (e.g., two intersections abutting a city block or two lanes of a multi-lane road).

In an embodiment, the directed graph 1000 has nodes 1006a-d representing different locations between the start point 1002 and the end point 1004 that could be occupied by an AV 100. In some examples, e.g., when the start point 1002 and end point 1004 represent different metropolitan areas, the nodes 1006a-d represent segments of roads. In some examples, e.g., when the start point 1002 and the end point 1004 represent different locations on the same road, the nodes 1006a-d represent different positions on that road. In this way, the directed graph 1000 includes information at varying levels of granularity. In an embodiment, a directed graph having high granularity is also a subgraph of another directed graph having a larger scale. For example, a directed graph in which the start point 1002 and the end point 1004 are far away (e.g., many miles apart) has most of its information at a low granularity and is based on stored data, but also includes some high granularity information for the portion of the graph that represents physical locations in the field of view of the AV 100.

The nodes 1006a-d are distinct from objects 1008a-b which cannot overlap with a node. In an embodiment, when granularity is low, the objects 1008a-b represent regions that cannot be traversed by automobile, e.g., areas that have no streets or roads. When granularity is high, the objects 1008a-b represent physical objects in the field of view of the AV 100, e.g., other automobiles, pedestrians, or other entities with which the AV 100 cannot share physical space. In an embodiment, some or all of the objects 1008a-b are a static objects (e.g., an object that does not change position such as a street lamp or utility pole) or dynamic objects (e.g., an object that is capable of changing position such as a pedestrian or other car).

The nodes 1006a-d are connected by edges 1010a-c. If two nodes 1006a-b are connected by an edge 1010a, it is possible for an AV 100 to travel between one node 1006a and the other node 1006b, e.g., without having to travel to an intermediate node before arriving at the other node 1006b. (When we refer to an AV 100 traveling between nodes, we mean that the AV 100 travels between the two physical positions represented by the respective nodes.) The edges 1010a-c are often bidirectional, in the sense that an AV 100 travels from a first node to a second node, or from the second node to the first node. In an embodiment, edges 1010a-c are unidirectional, in the sense that an AV 100 can travel from a first node to a second node, however the AV 100 cannot travel from the second node to the first node. Edges 1010a-c are unidirectional when they represent, for example, one-way streets, individual lanes of a street, road, or highway, or other features that can only be traversed in one direction due to legal or physical constraints.

In an embodiment, the planning module 404 uses the directed graph 1000 to identify a path 1012 made up of nodes and edges between the start point 1002 and end point 1004.

An edge 1010a-c has an associated cost 1014a-b. The cost 1014a-b is a value that represents the resources that will be expended if the AV 100 chooses that edge. A typical resource is time. For example, if one edge 1010a represents a physical distance that is twice that as another edge 1010b, then the associated cost 10 14a of the first edge 1010a may be twice the associated cost 1014b of the second edge 1010b. Other factors that affect time include expected traffic, number of intersections, speed limit, etc. Another typical resource is fuel economy. Two edges 1010a-b may represent the same physical distance, but one edge 1010a may require more fuel than another edge 1010b, e.g., because of road conditions, expected weather, etc.

When the planning module 404 identifies a path 1012 between the start point 1002 and end point 1004, the planning module 404 typically chooses a path optimized for cost, e.g., the path that has the least total cost when the individual costs of the edges are added together.

### Autonomous Vehicle Control

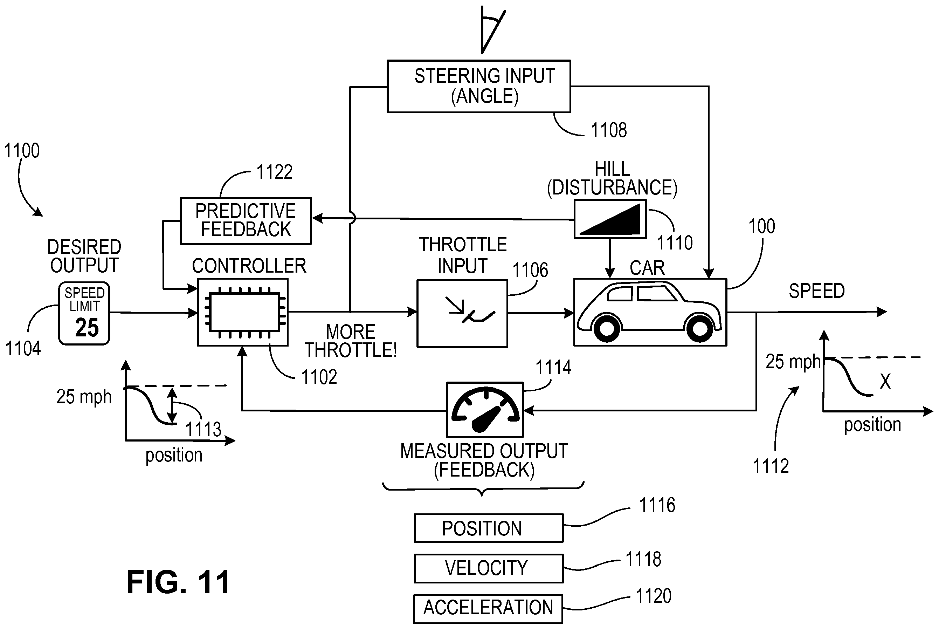

FIG. 11 shows a block diagram 1100 of the inputs and outputs of a control module 406 (e.g., as shown in FIG. 4). A control module operates in accordance with a controller 1102 which includes, for example, one or more processors (e.g., one or more computer processors such as microprocessors or microcontrollers or both) similar to processor 304, short-term and/or long-term data storage (e.g., memory random-access memory or flash memory or both) similar to main memory 306, ROM 1308, and storage device 210, and instructions stored in memory that carry out operations of the controller 1102 when the instructions are executed (e.g., by the one or more processors).

In an embodiment, the controller 1102 receives data representing a desired output 1104. The desired output 1104 typically includes a velocity, e.g., a speed and a heading. The desired output 1104 can be based on, for example, data received from a planning module 404 (e.g., as shown in FIG. 4). In accordance with the desired output 1104, the controller 1102 produces data usable as a throttle input 1106 and a steering input 1108. The throttle input 1106 represents the magnitude in which to engage the throttle (e.g., acceleration control) of an AV 100, e.g., by engaging the steering pedal, or engaging another throttle control, to achieve the desired output 1104. In some examples, the throttle input 1106 also includes data usable to engage the brake (e.g., deceleration control) of the AV 100. The steering input 1108 represents a steering angle, e.g., the angle at which the steering control (e.g., steering wheel, steering angle actuator, or other functionality for controlling steering angle) of the AV should be positioned to achieve the desired output 1104.

In an embodiment, the controller 1102 receives feedback that is used in adjusting the inputs provided to the throttle and steering. For example, if the AV 100 encounters a disturbance 1110, such as a hill, the measured speed 1112 of the AV 100 is lowered below the desired output speed. In an embodiment, any measured output 1114 is provided to the controller 1102 so that the necessary adjustments are performed, e.g., based on the differential 1113 between the measured speed and desired output. The measured output 1114 includes measured position 1116, measured velocity 1118, (including speed and heading), measured acceleration 1120, and other outputs measurable by sensors of the AV 100.

In an embodiment, information about the disturbance 1110 is detected in advance, e.g., by a sensor such as a camera or LiDAR sensor, and provided to a predictive feedback module 1122. The predictive feedback module 1122 then provides information to the controller 1102 that the controller 1102 can use to adjust accordingly. For example, if the sensors of the AV 100 detect ("see") a hill, this information can be used by the controller 1102 to prepare to engage the throttle at the appropriate time to avoid significant deceleration.

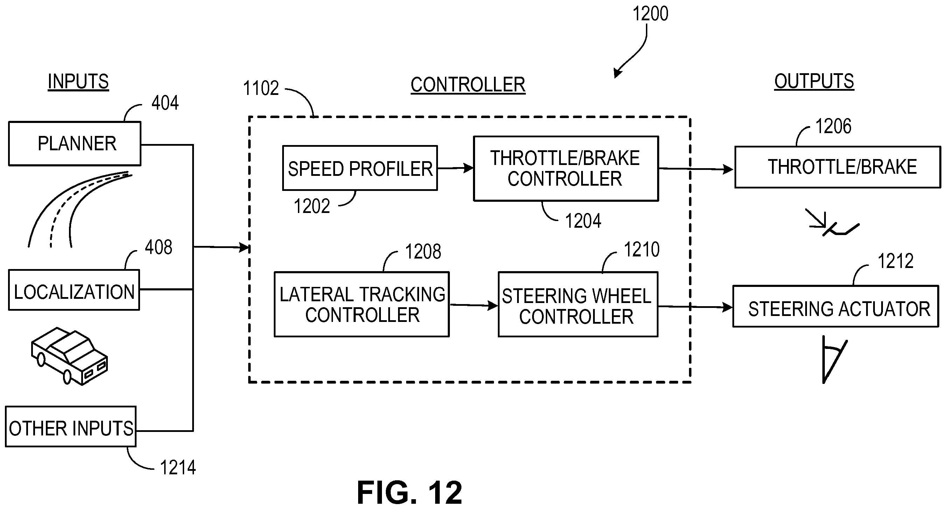

FIG. 12 shows a block diagram 1200 of the inputs, outputs, and components of the controller 1102. The controller 1102 has a speed profiler 1202 which affects the operation of a throttle/brake controller 1204. For example, the speed profiler 1202 instructs the throttle/brake controller 1204 to engage acceleration or engage deceleration using the throttle/brake 1206 depending on, e.g., feedback received by the controller 1102 and processed by the speed profiler 1202.

The controller 1102 also has a lateral tracking controller 1208 which affects the operation of a steering controller 1210. For example, the lateral tracking controller 1208 instructs the steering controller 1204 to adjust the position of the steering angle actuator 1212 depending on, e.g., feedback received by the controller 1102 and processed by the lateral tracking controller 1208.

The controller 1102 receives several inputs used to determine how to control the throttle/brake 1206 and steering angle actuator 1212. A planning module 404 provides information used by the controller 1102, for example, to choose a heading when the AV 100 begins operation and to determine which road segment to traverse when the AV 100 reaches an intersection. A localization module 408 provides information to the controller 1102 describing the current location of the AV 100, for example, so that the controller 1102 can determine if the AV 100 is at a location expected based on the manner in which the throttle/brake 1206 and steering angle actuator 1212 are being controlled. In an embodiment, the controller 1102 receives information from other inputs 1214, e.g., information received from databases, computer networks, etc.

### Controlling the Operation of a Fleet of Autonomous Vehicles

In some embodiments, a computer system controls the operation of a fleet of autonomous vehicles. For example, a computer system can deploy autonomous vehicles to one or more locations or regions, assign transportation tasks to each of the autonomous vehicles (e.g., pick up and transport passengers, pick up and transport cargo, etc.), assign maintenance tasks to each of the autonomous vehicles (e.g., charge their batteries at charging stations, receive repairs at a service station, etc.), and/or assign other tasks to each of the autonomous vehicles.

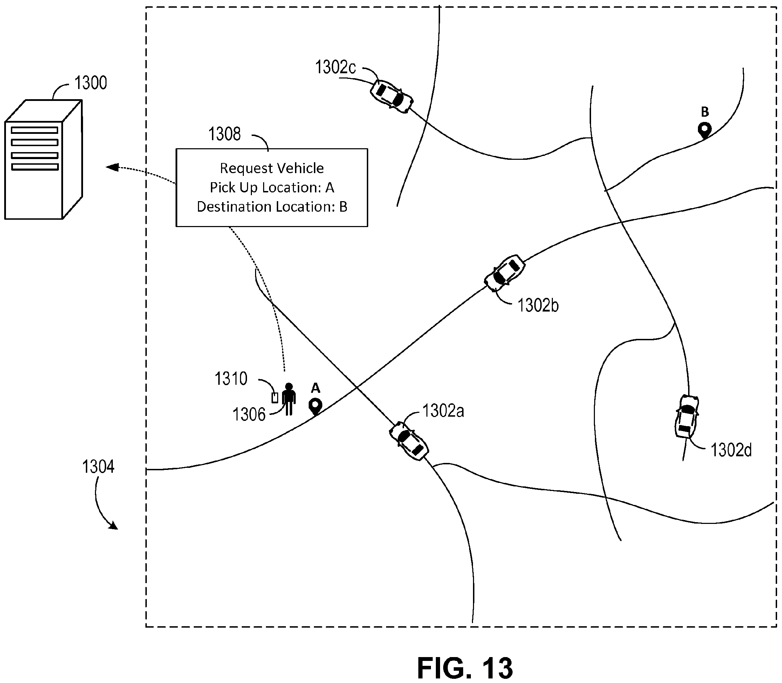

FIG. 13 shows an example computer system 1300 for controlling the operation of a fleet of autonomous vehicles 1302a-d. In this example, the computer system 1300 is remote from each of the autonomous vehicle 1302a-d, and communicates with the autonomous vehicles 1302a-d (e.g., via a wireless communications network). In some embodiments, the computer system 1300 is implemented in a similar manner as the remote servers 136 described with respect to FIG. 1 and/or the cloud computing environment 300 described with respect to FIGS. 1 and 3. In some embodiments, one or more of the autonomous vehicles 1302a-d are implemented in a similar manner as the autonomous vehicle 100 described with respect to FIG. 1A.

Each of the autonomous vehicles 1302a-d is positioned in a geographical region 1304. The geographical region 1304 can correspond to a particular political region (e.g., a particular country, state, county, province, city, town, borough, or other political region), a particular pre-defined region (e.g., a region having particular pre-defined boundaries such as a software determined geo-fenced area), a transiently-defined region (e.g., a region having dynamic boundaries such as a group of streets affected by dense traffic), or any other region.

In this example, a user 1306 positioned at a location "A" wishes to travel to a location "B" in an autonomous vehicle. To request an autonomous vehicle for use, the user 1306 transmits a request 1308 to the computer system 1300 (e.g., via a mobile device 1310, such as a smartphone, tablet computer, or wearable computing device). In some embodiments, the request 1308 includes one or more data items indicating the user's desired pick up location (e.g., the current location of the user or another pick up location specified by the user), a desired pick up time, and/or a desired destination location (e.g., a destination location specified by the user).

Responsive to the request 1308, the computer system 1300 selects one of the autonomous vehicles 1302a-d to fulfill the request. The computer system 1300 considers one or more different criteria in selecting an autonomous vehicle. As an example, the computer system 1300 can determine which of the autonomous vehicles is currently available (e.g., is not currently assigned to transport a passenger and/or cargo, and/or is not actively transporting a passenger and/or or cargo), and select one of the available autonomous vehicles for assignment to the user 1306. As another example, the computer system 1300 can also consider whether an autonomous vehicle is currently unavailable, but is anticipated to be available in the future (e.g., an autonomous vehicle that is currently assigned to another task, but is anticipated to complete its task sufficiently soon for subsequent assignment to the user 1306 and arrival at the user's desired pick up location at the desired time). In some embodiments, the computer system 1300 prioritizes certain autonomous vehicles for selection over others (e.g., based on the proximity of the autonomous vehicles with respect to the user 1306, the orientation or heading of the autonomous vehicles with respect to the user 1306, time and/or ease in which the autonomous vehicles can reach the user 1306, the ability for autonomous vehicles to navigate to users while minimally affecting traffic flows, etc.).

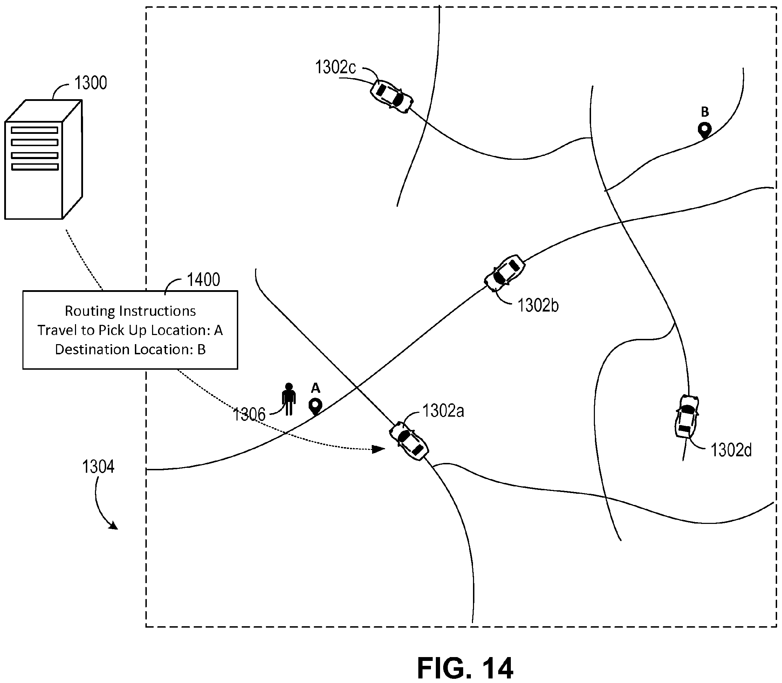

In this example, the computer system 1300 selects the autonomous vehicle 1302a for assignment to the user 1306. As shown in FIG. 14, the computer system 1300 transmits a command signal 1400 to the autonomous vehicle 1302a instructing the autonomous vehicle 1302a to fulfill the user's request. In some embodiments, the command signal 1400 includes one or more data items indicating a pick up location for the user 1306 (e.g., the pick up location specified by the user), a pick up time, and/or the destination location (e.g., the destination location specified by the user).

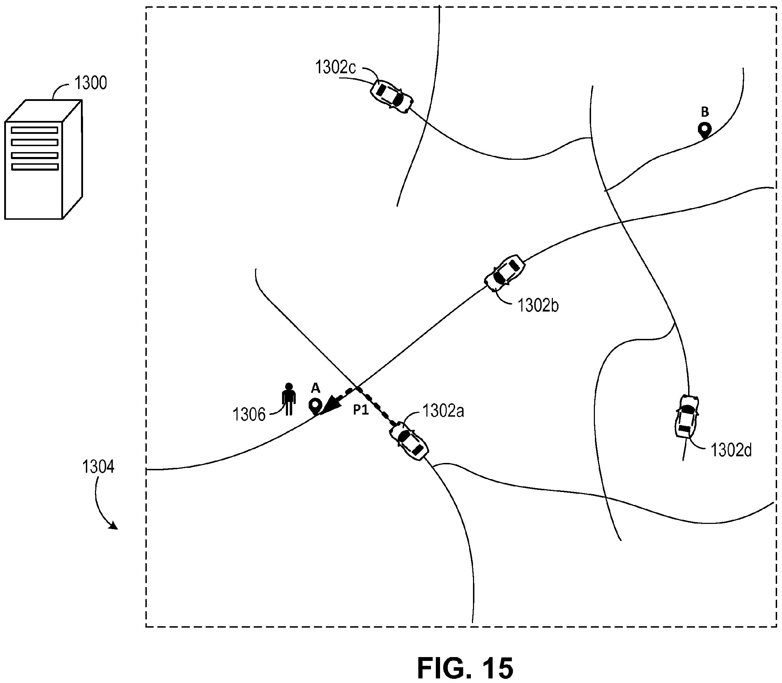

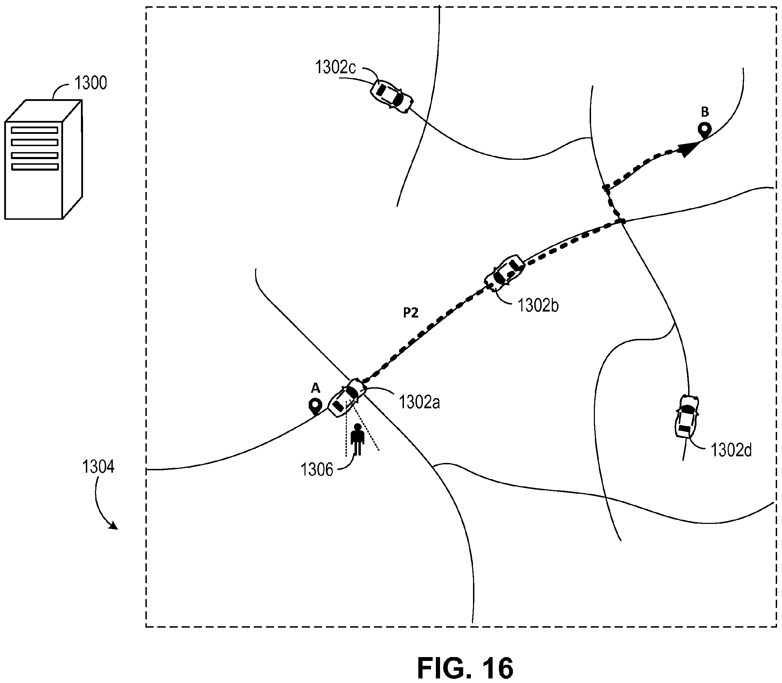

As shown in FIG. 15, the autonomous vehicle 1302a navigates to the specified pick up location (e.g., the location A along a path P1) to pick up the user 1306 ( along with her travel party and/or any cargo, if applicable) at the specified time. As shown in FIG. 16, once the user 1306 has boarded the autonomous vehicle 1302a, the autonomous vehicle 1302a navigates to the destination location (e.g., the location B along a path P2). Upon reaching the destination location, the autonomous vehicle 1302a stops, and allows the user 106 to disembark. The autonomous vehicle 1302a is then made available for use by others (e.g., to transport one or more other users and/or cargo).

The path of the autonomous vehicle 1302a can be determined by the autonomous vehicle 1302a itself and/or by the computer system 1300. For instance, in some implementations, the autonomous vehicle 1302a determines a path of travel based on its current location and its goal location (e.g., the specified pick up location and/or the specified destination location). In some implementations, the computer system 1300 determines a path of travel for the autonomous vehicle 1302a, and transmit the determined path to the autonomous vehicle 1302a (e.g., in the command signal 1400, or some other data transmission).

The operation of the computer system 1300 can provide various technical benefits. As an example, the computer system 1300 can facilitate the automatic operation of a fleet of autonomous vehicles, enabling autonomous vehicles to fulfill requests in an automated manner without human intervention. Further, the computer system can automatically control the operation of the fleet of autonomous vehicles such that requests are fulfilled in an efficient and effective manner (e.g., by reducing the amount of time that autonomous vehicles are idle, and increasing the speed at which requests are fulfilled).

In some implementations, an autonomous vehicle is used to transport cargo (e.g., packages, items, or other objects) instead of or in addition to transporting passengers. For instance, a user can transmit a request to the computer system 1300 indicating a desired pick up location (e.g., a location of cargo), a desired pick up time, and/or a desired destination location (e.g., a destination location where the cargo is to be delivered). In response to the request, the computer system 1300 assigns an autonomous vehicle to transport the cargo, and transmit command signals to the autonomous vehicle specifying the pickup and destination locations and pick up time (e.g., in a similar manner as described with respect to FIGS. 13-16).

In some implementations, two or more autonomous vehicles are positioned at a similar location at a similar time, and/or have a similar destination location. The computer system 1300 can provide different paths of travel to one or more of the autonomous vehicles, such that their impact on vehicular traffic in the transportation network is reduced. For instance, if multiple autonomous vehicles were to be assigned an identical route to a destination location, each of the autonomous vehicles would travel along the same roads of the transportation network in close session. This can potentially increase the congestion of those roads, and decrease the effective travel speed across them. As an alternative, one or more autonomous vehicles can be assigned to an alternative route to the destination, such that their impact is not concentrated to a single route (e.g., as it instead spread among several different roads).

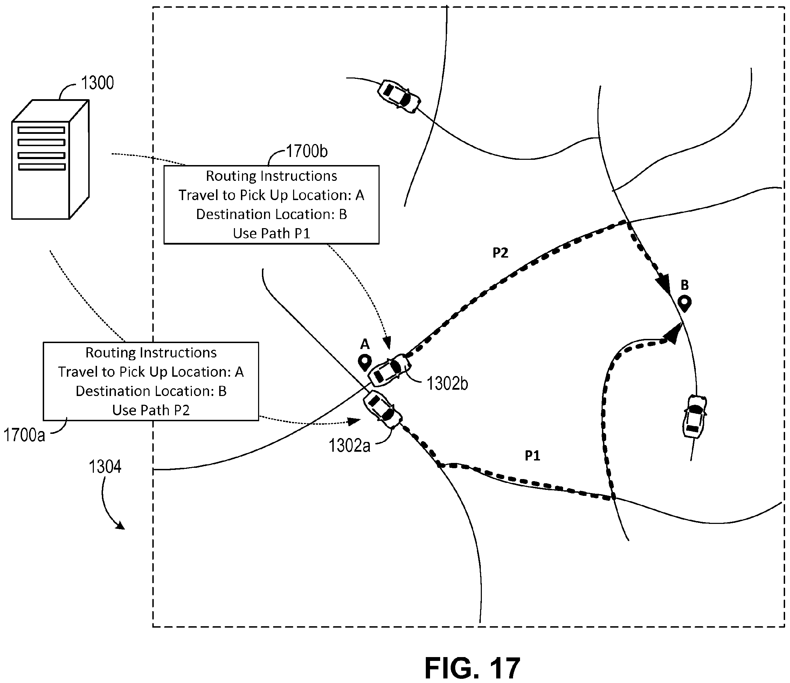

As an example, as shown in FIG. 17, two autonomous vehicles 1302a and 1302b are positioned at a similar location (e.g., in proximity to a pick up location A) and have been assigned to travel to a similar destination location (e.g., to a specified location B). To mitigate road congestion, the computer system 1300 can transmit a first command signal 1700a to a first autonomous vehicle 1302a including instructions to navigate to the destination location along a path P1, and a second command signal 1700b to a second autonomous vehicle 1302b including instructions to navigate to the destination location along a path P2. Paths P1 and P2 are different from one another, and utilize at least some different roads from one another. Accordingly, the impact on traffic flows and route conditions of the autonomous vehicles is spread among different routes, rather than concentrated on a single route.

In some embodiments, a computer system 1300 estimates a future demand for use of autonomous vehicles, and preemptively direct autonomous vehicles to certain locations to better meet the estimated demand. For instance, the computer system 1300 can direct autonomous vehicles to certain locations, even if it has not yet received a request from a user associated with that location. In some embodiments, the computer system 1300 estimates a relatively higher future demand for autonomous vehicles at a particular location, and direct autonomous vehicles to that location from locations having a relatively lower current and/or estimated future demand.

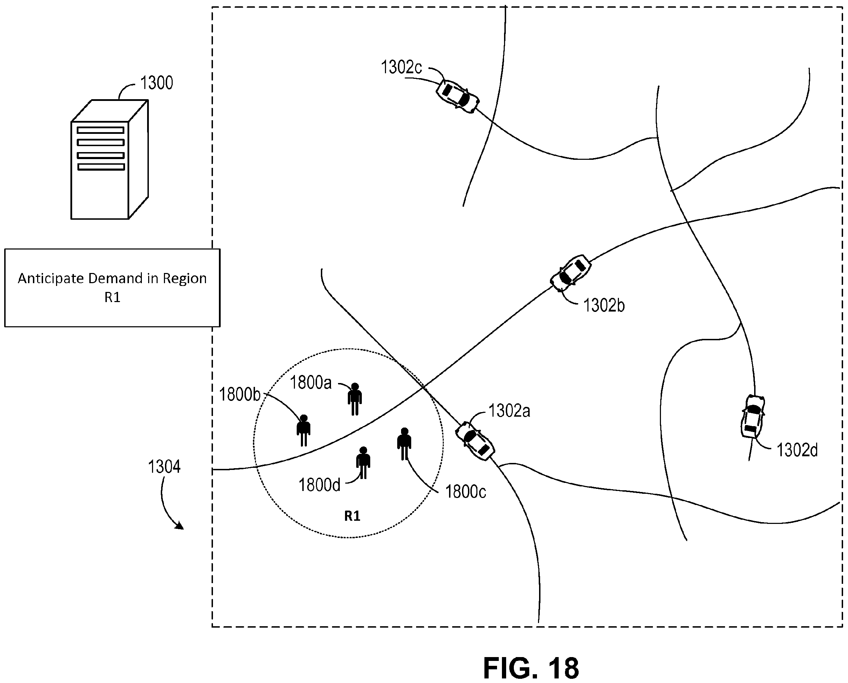

As an example, FIG. 18 shows a region 1304 having several autonomous vehicles 1302a-d and several users 1800a-d. In this example, none of the users 1800a-d have yet submitted a request for use of an autonomous vehicle. Nevertheless, the computer system 1300 has estimated that there will be a future demand in a region R1.

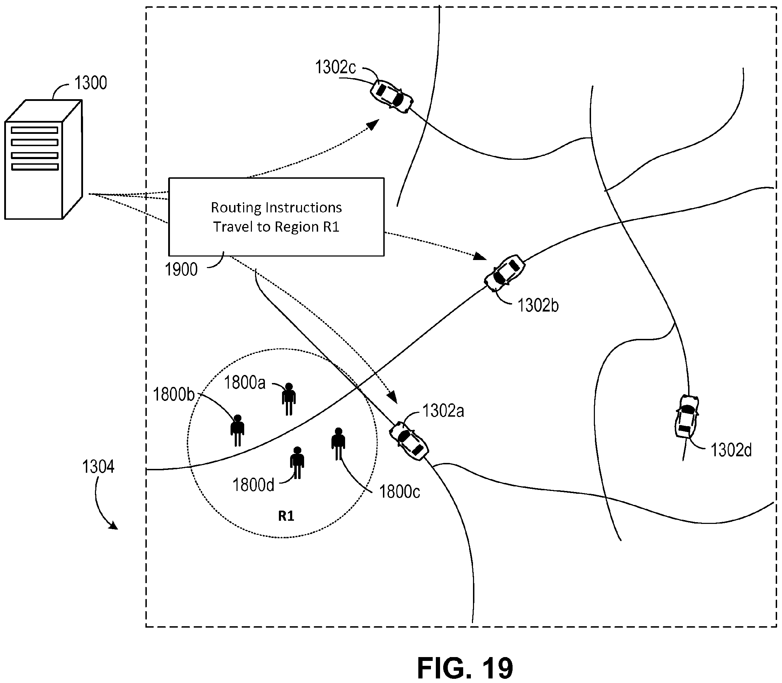

In response, the computer system 1300 transmits command signals to some or all of the autonomous vehicles 1302a-d to reposition those autonomous vehicles in anticipation of the estimated future demand. For instance, as shown in FIG. 19, the computer system 1300 can determine that three additional vehicles are needed in the region R1 to fulfill the estimated demand, and transmit command signals 1900 to each of the autonomous vehicles 1302a-c instructing them to travel to the region R1.

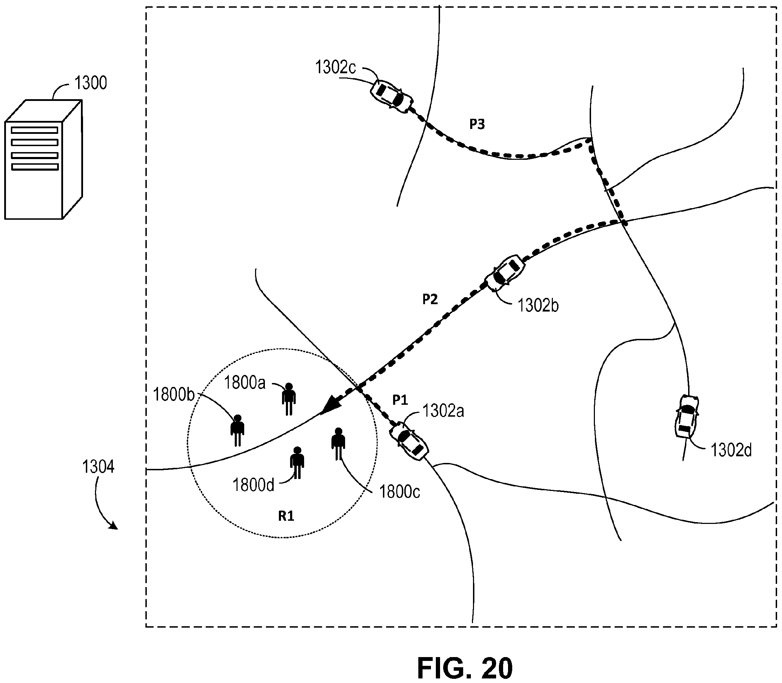

As shown in FIG. 20, in response to receiving the command signals 1900, the autonomous vehicles 1302a-c navigate to the region R1 (e.g., along paths P1, P2, and P3). In some embodiments, some or all of the paths P1, P2, and P3 are determined by the autonomous vehicles themselves. In some embodiments, some or all of the paths P1, P2, and P3 are determined by the computer system 1300 and transmitted to a respective autonomous system (e.g., as a part of the command signals 1900 or some other data transmission).

The computer system 1300 can estimate future demand using a variety of different techniques. In some embodiments, the computer system 1300 collects current and/and historical information regarding one or more users and their behavior, one or more autonomous vehicles and their operation, the environment of the users and/or autonomous vehicles, the usage of the autonomous vehicles, and other factors that can potentially indicate or influence future demand. Using this information as inputs, the computer system 1300 can generate a predictive model to estimate the future demand with respect to one or more particular regions or locations and with respect to one or more particular spans or points in item.

As an example, the computer system 1300 can collect user profile data from one or more of its users. User profile data can include any information regarding one or more users. For instance, user profile data can include information regarding the current location of one or more users (e.g., based on location information provided by a mobile device of each user). User profile data can also include demographic information regarding one or more users (e.g., one or more demographic indicators, such as an age, gender, occupation, are or location of residence, etc. of each user). The user profile data can further includes user's social media data. The user profile data can also include information regarding the historical behavior of one or more users (e.g., previous locations of the user and the associated times, previous trips taken by the user and the associated times, etc.) In some implementations, user profile data includes information regarding one or more trends associated with a user. As an example, the user profile data can include information regarding a user's a tendency to travel between certain locations under certain conditions (e.g., time of day, day of week, month, season, etc.). As another example, the user profile can include information regarding a user's trends to request use of an autonomous vehicle under certain conditions (e.g., time of day, day of week, month, season, weather, traffic, etc.). As another example, user profile data could include information indicating a user's frequency of travel and/or changes to his frequency of travel (e.g., increasing over time or decreasing over time). Further, the user profile data can also include information regarding the preferences of one or more users (e.g., indicating that the user prefers a particular types of vehicles for travel, prefers a particular level of service for travel, etc.). The user profile data can include contact information for one or more users (e.g., phone number, mailing address, e-mail address, residential address, business address, etc.), In some implementations, user profile data can be collected from one or more devices associated with one or more users (e.g., mobile devices or other devices operated by the users).

As another example, the computer system 1300 can collect vehicle telemetry data from one or more of the autonomous vehicles. Vehicle telemetry data can include information regarding the current operation of one or more autonomous vehicles (e.g., an autonomous vehicle's location, speed, heading, orientation, route, path, etc.). Vehicle telemetry data can also include information regarding the historical behavior of one or more users (e.g., the previous locations of the autonomous and the associated time, previous routes taken by the autonomous vehicle and the associated time, etc.). Vehicle telemetry data can include information regarding the current or historical environmental conditions observed by one or more autonomous vehicles (e.g., a traffic condition of a road observed by the autonomous vehicle, a closure or an obstruction of a road observed by the autonomous vehicle, an object or hazard observed by the autonomous vehicle, etc.).

As another example, the computer system 1300 can collect event information regarding one or more events that have occurred in the past, are currently occurring, and/or are expected to occur in the future. Example events include civic events (e.g., parades, sports events, festivals, concerts, etc.), traffic events (e.g., road closures, detours, congestion, change in a direction of traffic flow, etc.), and weather events (e.g., rain, flooding, wind, fog, lightning, snow, ice, sleet, etc.), among others. In some embodiments, the computer system 1300 collects historical information regarding one or more events (e.g., information describing the occurrence of an event, the time at which in occurred, and the location of occurrence). In some embodiments, the computer system 1300 collects information regarding one or more currently occurring events (e.g., information describing the occurrence of an event, the time of occurrence, and the location of occurrence). In some embodiments, the computer system 1300 collects information regarding one or more planned events in the future (e.g., information describing the anticipated occurrence of an event, the anticipated time of occurrence, and the anticipated location of occurrence). In some embodiments, the computer system 1300 estimates or predicts the future occurrence of one or more events (e.g., based on a predictive model using collected event information as inputs). In some implementations, event information is collected from one or more devices associated with one or more users, the autonomous vehicles, and/or from third-parties (e.g., a transportation authority, weather information service, traffic information service, governmental agency or organization, etc.).

Using these types of information as inputs, the computer system 1300 can generate a statistical model (e.g., a predictive model, a stochastic model, a regression model etc.) to estimate the future demand with respect to one or more particular regions or locations and with respect to one or more particular spans or points in item. As an example, the computing system 1300 can estimate a future demand based on a statistical model (e.g., a Bayesian statistical model). For instance, a statistical model can be generated based on the user profile data, the vehicle telemetry data, event information, and other information collected by the computer system 1300. Using the statistical model, the computer system 1300 can identify one or more factors or conditions correlating with an increased or decreased likelihood that a user will submit a request for use of an autonomous vehicle at a particular region or location, and at a particular time. Using this information, the computer system 1300 can identify particular regions or locations that are associated with a higher likelihood of having a future user request at particular times. Similarly, future demand estimates can be generated using stochastic differential equations describing demand evolution and generation across a range of different locations, regions, and/or time, and/or these estimates can be aggregated together to determine an overall estimated future demand.

In the example shown in FIG. 20, the region R1 corresponds to the geographical location of several users 1800a-d. However, this is merely an illustrative example. In practice, a geographical concentration of users can be but one factor in estimating a future demand for use of the autonomous vehicles.

Further, although a region R1 is shown in FIG. 20, this is also merely an illustrative example. In practice, the computer system 1300 can estimate future demand with respect to a more specific geographical area (e.g., a specific location) or more general geographical area (e.g., a larger geographical region).

Further, the computer system 1300 can estimate future with respect to a relatively specific range of time (e.g., an instantaneous point in time) or a relatively broader range of time (e.g., a range of time on the order of seconds, minutes, hours, days, weeks, months, seasons, years, or other ranges of time). Further still, the computer system 1300 can estimate future demand for a relatively nearer time in the future (e.g., on the order of seconds or minutes in the future), to for a relatively further time in the future (e.g., on the order of hours, days, weeks, months, or years in the future). Further, upon estimating future demand, the computer system 1300 can delay transmitting command signals to autonomous vehicles in accordance with the estimated future time of that demand. For instance, if the computer system 1300 estimates that demand will increase at a particular location several hours from the current time, the computer system 1300 can delay transmitting commands with repositioning instructing to autonomous vehicles until closer to the estimated time.

In some embodiments, the computer system 1300 instructs one or more autonomous vehicles to "roam" in a particular region or along a particular path (e.g., to search for potential users or cargo to transport).

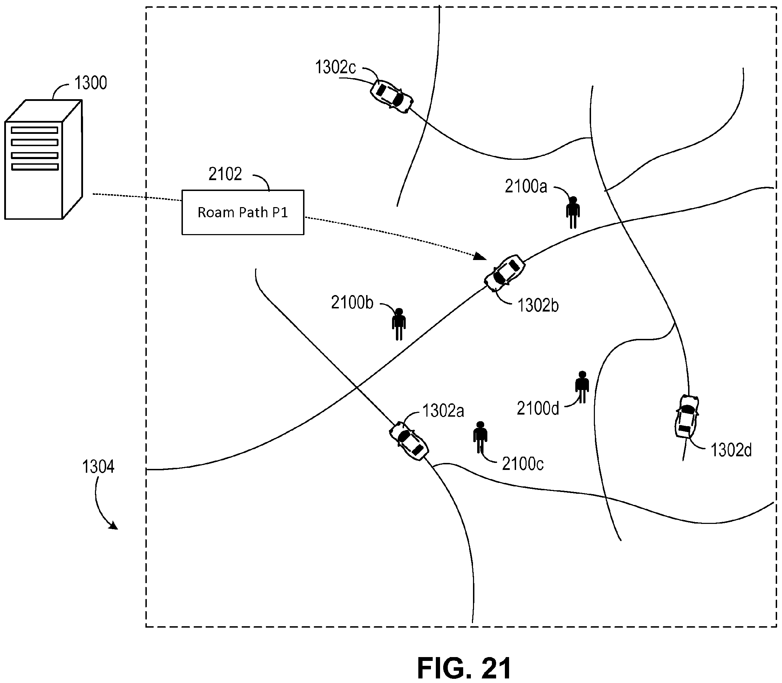

As an example, FIG. 21 shows a region 1304 having several autonomous vehicles 1302a-d and several users 2100a-d. In this example, none of the users 2100a-d have yet submitted a request for use of an autonomous vehicle. Further, the autonomous vehicle 1302b is not actively transporting a user or cargo, and has not yet been assigned to transport a user or cargo.

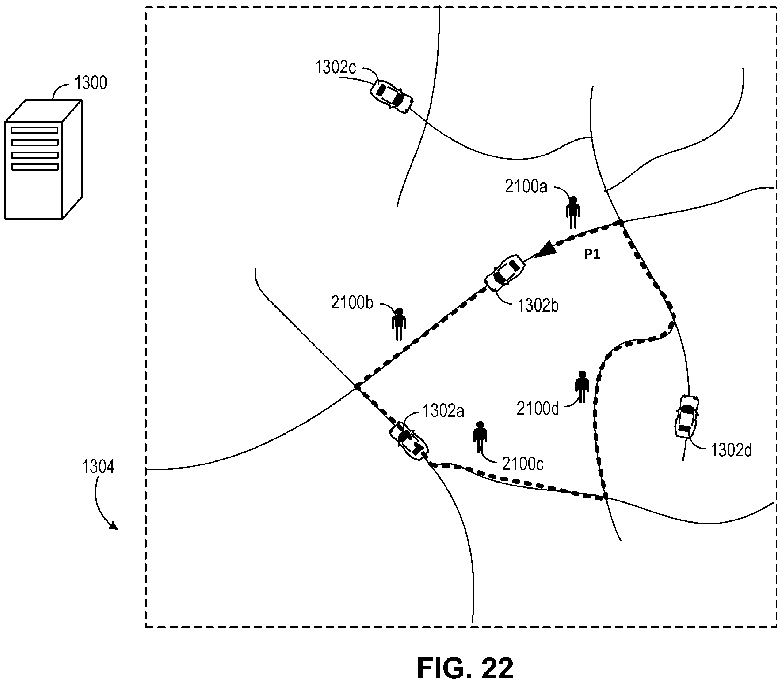

Rather than having the autonomous vehicle 1302b be idle, the computer system 1300 transmits a command signal 2102 to the autonomous vehicle 1302b instructing the autonomous vehicle 1302b to "roam" along a path P1. As shown in FIG. 22, in response, the autonomous vehicle 102B navigates the path P1 (e.g., until it is assigned to transport a user or cargo, or assigned to some other task).

In some embodiments, the computer system 1300 specifies the roaming path based on information regarding the known and/or predicted locations of users. For example, the computer system 1300 can collect user profile data including the current locations of one or more users. Based on this information, the computer system 1300 can define a roaming path such that an autonomous vehicle travels into a proximity of one or more of those users (e.g., in anticipation of a potential request). As another example, the computer system 1300 can use a statistical model to estimate a future request by one or more users at particular locations. Based on this information, the computer system 1300 can define a roaming path such that an autonomous vehicle travels into a proximity of one or more of those locations (e.g., in anticipation of a potential request). In some embodiments, the computer system 1300 can generate different roaming paths for different autonomous vehicles such that each autonomous vehicle roams in a different region and/or along a different path (e.g., to reduce redundancy).

In some embodiments, the computer system 1300 instructs one or more autonomous vehicles to "idle" at a particular location (e.g., to await a potential user or cargo to transport, or assignment to another task).

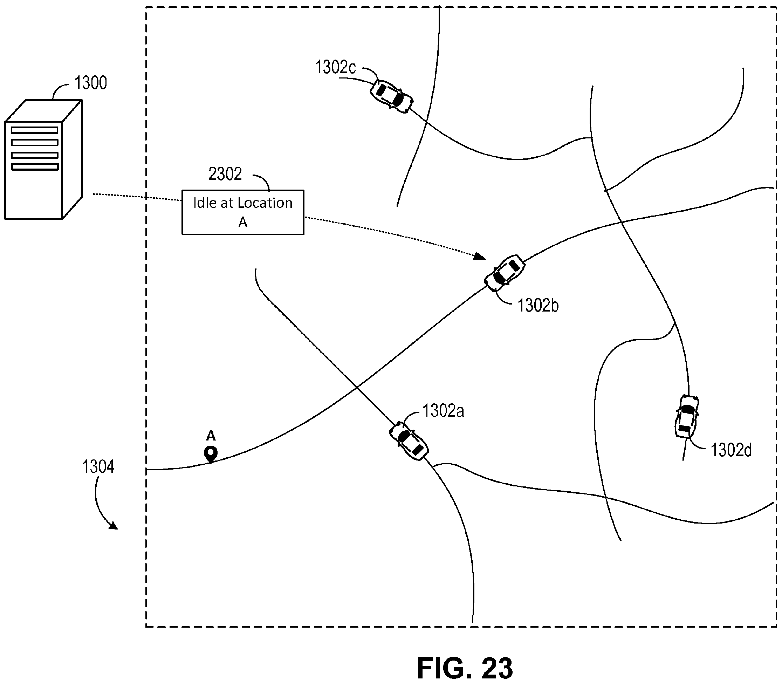

As an example, FIG. 23 shows a region 1304 having several autonomous vehicles 1302a-d. In this example, the autonomous vehicle 1302b is not actively transporting a user or cargo, and has not yet been assigned to transport a user or cargo.

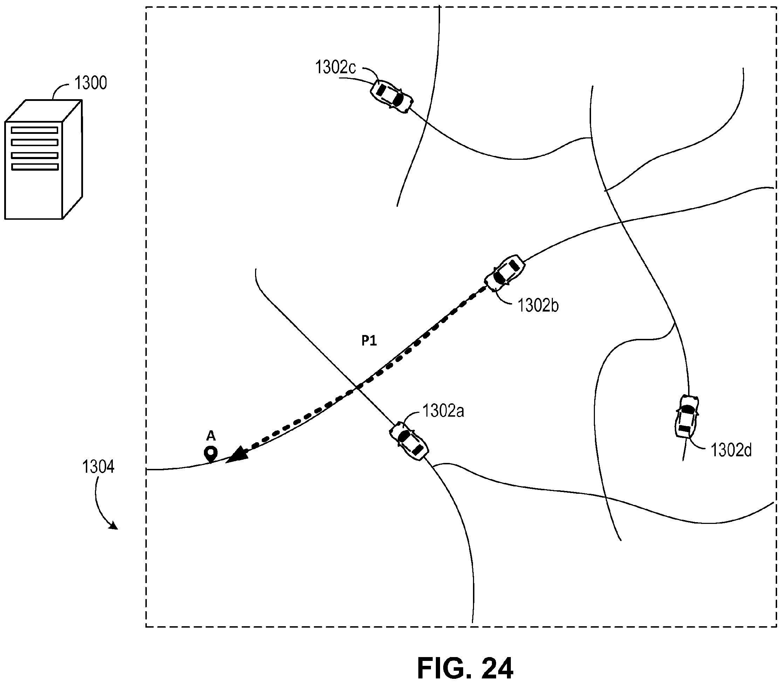

Rather than having the autonomous vehicle 1302b remain at its current location, the computer system 1300 transmits a command signal 2302 to the autonomous vehicle 1302b instructing the autonomous vehicle 1302b to navigate to a location A and idle at that location (e.g., until the autonomous vehicle is assigned another task). As shown in FIG. 24, in response, the autonomous vehicle 102B navigates to the location A along a path P1 and remains that that location (e.g., until it is assigned to transport a user or cargo, or assigned to some other task). In some embodiments, the autonomous vehicle 102B identifies and navigates to a safe idling location at or in proximity to the specified location (e.g., a parking space, designed waiting area, etc.).

In some embodiments, the computer system 1300 specifies an idling location based on information regarding the known and/or predicted locations of users. For example, the computer system 1300 can collect user profile data including the current locations of one or more users. Based on this information, the computer system 1300 can identify an idling location that is in proximity of one or more of those users (e.g., in anticipation of a potential request). As example, the computer system 1300 can use a statistical model to estimate a future request by one or more users at particular locations. Based on this information, the computer system 1300 can define an idling location that is in proximity of one or more of those locations (e.g., in anticipation of a potential request). In some embodiments, the computer system 1300 generates different idling locations for different autonomous vehicles such that each autonomous vehicle idles a different region (e.g., to reduce redundancy).

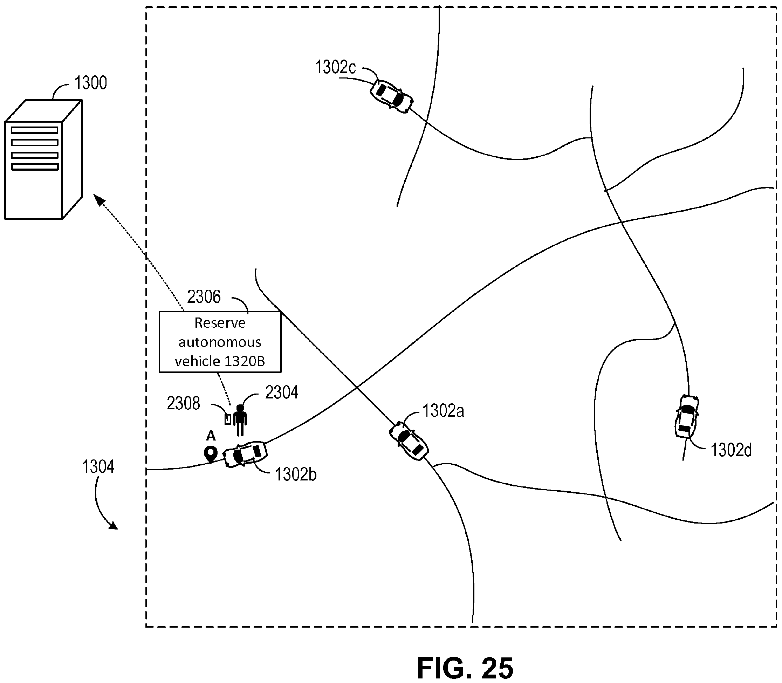

In some embodiments, a user can request an autonomous vehicle by physically approaching an idling autonomous vehicle, and submitting a request identifying that autonomous vehicle. For example, as shown in FIG. 25, a user 2304 can approach the idling autonomous vehicle 1302b and submit a request 2306 to reserve the autonomous vehicle 1302b for use (e.g., using her mobile device 2308).

The request 2306 includes one or more data items identifying the autonomous vehicle 1302b. As an example, the user can input an identifier associated with the autonomous vehicle 102B (e.g., an alphanumeric sequence displayed on the autonomous vehicle 1302b, such as a serial number or vehicle name), and the identifier can be included in the request 2306. As another example, the autonomous vehicle can include a visually distinctive graphical element (e.g., a bar code, QR code, or other identifier), and the user can capture a video or image of the graphical element (e.g., using a camera on her mobile device 2308). The graphical element and/or a representation of the graphical element (e.g., an underlying identifier encoded in the graphical element) can be included in the request 2306.

In some embodiments, the autonomous vehicle includes a proximity based communications transceiver (e.g., a Bluetooth or near-field communications module). The user can select the autonomous vehicle 1302b by placing her mobile device 2308 (having its own communications transceiver) in proximity to the communications transceiver of the autonomous vehicle 1302b. In response, the communications transceiver of the autonomous vehicle 1302b can transmit an identifier of the autonomous vehicle 1302b to the mobile device 2308. The identifier can be included in the request 2306.

In some embodiments, the user selects the autonomous vehicle 1302b by placing her mobile device 2308 in proximity to the communications transceiver of the autonomous vehicle 1302b. In response, the mobile device 2308 transmits an identifier associated with the user 2304 (e.g., a user name and/or other access credentials) to the autonomous vehicle 1302b. The autonomous vehicle 1302b can transmit the request 2306 to the computer system 1300 (e.g., on behalf of the user 2304). The request can include one or more data items identifying the user and/or the autonomous vehicle. In some embodiments, the user selects the autonomous vehicle 1302b by using a biometric scanner (e.g., an iris scanner, a fingerprint reader, or a facial recognition system) to verify the user's identity. In some embodiments, a user that has not hailed/utilized autonomous vehicles previously is directed to a service sign-up internet link/webpage/website/microsite/app download link on their mobile device upon attempting to select the autonomous vehicle.

In response to the request 2306, the computer system 1300 can assign the autonomous vehicle 102B for use by the user 2304 and transport the user to a desired location (e.g., in a similar manner as described with respect to FIGS. 13-16). For instance, upon reserving the autonomous vehicle 1302b for use, the user 2304 can input a desired destination and board the autonomous vehicle 1302b. In response, the autonomous vehicle 1302b can navigate to the specified location (e.g., on its own accord or based on information provided by the computer system 1300), and allow the user 2304 is disembark.

In some embodiments, the computer system 1300 instructs one or more autonomous vehicles to travel to a particular location to receive maintenance and/or charge its batteries.

For instance, the computer system 1300 can instruct an autonomous vehicle to travel to a charging station and recharge its batteries for a period of time. In some embodiments, the computer system 1300 instructs an autonomous vehicle to travel to a charging station based on vehicle telemetry data. For instance, if a low battery charge condition or depleted battery condition is detected (e.g., based on sensor data included in the vehicle telemetry data), the computer system 1300 can instruct the autonomous vehicle to travel to a charging station to recharge its batteries such that the autonomous vehicle can continue operation.

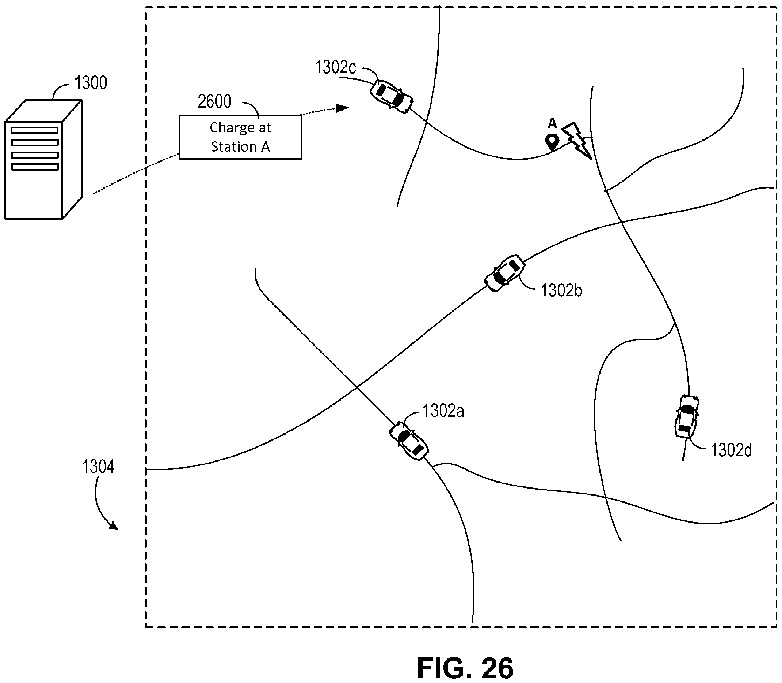

As an example, FIG. 26 shows a region 1304 having several autonomous vehicles 1302a-d. In this example, the autonomous vehicle 1302c has a low battery charge, and will need to recharge its batteries to sustain operation.

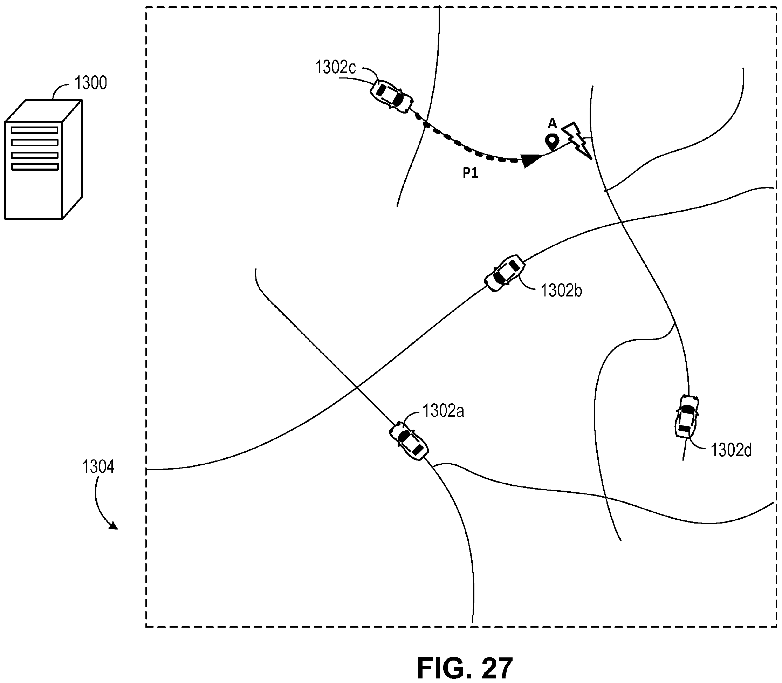

To recharge the batteries of the autonomous vehicle 1302c, the computer system 1300 transmits a command signal 2600 to the autonomous vehicle 1302 instructing the autonomous vehicle 1302c to navigate to a recharging station located at a location A and recharge its batteries. As shown in FIG. 27, in response, the autonomous vehicle 102C navigates to the location A along a path P1 and remains that that location (e.g., until its batteries have been recharged, or until it has been assigned another task).

In some embodiments, the computer system 1300 prioritizes the performance of certain tasks over the performance of other tasks. For instance, the computer system 1300 can prioritize fulfilling requests for transporting users (e.g., to convey users between different locations) over requests for transporting cargo (e.g., to convey cargo between different locations). Further, when an autonomous vehicle is not actively transporting users and/or cargo, and has not yet been assigned to transport users and/or cargo, the computer system 1300 can instruct the autonomous vehicle to perform various tasks while it waits for a potential request. For instance, the computer system 1300 can reposition the autonomous vehicle to a different region or location in anticipation of a request, instruct the autonomous vehicle to idle at a particular location, instruct the autonomous vehicle to roam at a particular region or along a particular path, instruct the autonomous vehicle to recharge its batteries at a charging station, instruct the autonomous vehicle to receive maintenance at a service station, and/or perform some other task. This is beneficial, for example, as it prioritizes the transportation of users and/or cargo (e.g., thereby improving the effectiveness and responsiveness of the fleet of autonomous vehicles), while reducing wastefulness or unbeneficial inactivity in the autonomous vehicles while they are not transporting users and/or cargo (e.g., thereby improve the efficiency of operation of the fleet of autonomous vehicles).

In some embodiments, the computer system 1300 prioritizes the transportation of certain users and/or cargo over others. As an example, each request can be associated with a particular level of service (e.g., "economy," "standard," "premium," etc.), each having a different priority level. Higher priority requests can take precedence over lower priority requests (e.g., such that they are more likely to be fulfilled first). In some embodiments, higher levels of service are associated with higher fares or rates charged to the user.

As another example, the computer system 1300 can prioritize the transportation of users and/or cargo to certain destinations over other destinations. As an example, transportation to certain destinations (e.g., airports) are often more time-sensitive than transportation to other destinations (e.g., the beach). To account for these differences, the computer system 1300 can thus prioritize certain requests such that certain destinations take precedence over others.

In the example shown in FIGS. 13-16, an autonomous vehicle is assigned to a single request at a time (e.g., to transport a single user along with her travel party and/or any cargo at a time). However, this need not be the case. In some implementations, an autonomous vehicle are concurrently assigned to multiple different requests a time. For instance, an autonomous vehicle can be assigned to pick up a first user (and her travel party) having a first request, pick up a second user (along with her travel party and/or any cargo, if applicable) having a second request, transport both the first user and the second user concurrently, and individually drop each of the users off at their respective destinations (e.g., a "carpooling" arrangement).

In some embodiments, the computer system 1300 assigns autonomous vehicles based on demand. For example, if autonomous vehicles are in low demand, the computer system 1300 can assign each request a dedicated autonomous vehicle (e.g., such the user and her party do not have to ride with others). However, if autonomous vehicles are in high demand, the computer system 1300 can concurrently assign multiple requests the same autonomous vehicle (e.g., to improve the effectiveness and efficiency of the fleet of autonomous vehicles). In some embodiments, each request is associated with a particular level of service (e.g., "economy," "standard," "premium," etc.), each having a different priority level. Higher priority requests can take precedence over lower priority requests, such that they are more likely to be assigned a dedicated autonomous vehicle. In some embodiments, higher levels of service are associated with higher fares or rates charged to the user.

In some embodiments, if autonomous vehicles are in high demand, the computer system 1300 offers a user a shared or carpooled ride with one or more other requestors in exchange for a shorter wait time. If the user accepts the offer, the computer system 1300 can concurrently assign the user's request and another user's request to the same autonomous vehicle. If the user declines, the computer system 1300 can assign the user's request to a dedicated autonomous vehicle when an autonomous vehicle is made available for dedicated use. In some embodiments, the computer system 1300 estimates a first length of time associated with fulfilling the user's request using a shared or carpool ride and a second length of time associated with fulfilling the user's request using a dedicated ride, and provide this information to the user (e.g., to assist the user in coming to a decision).

In some embodiments, the computer system 1300 determines a priority metric for each user and/or request, and prioritize the fulfillment of requests based on that metric. A priority metric can be, for example, a score or rank associated with each user and/or request. Priority metrics can be determined based on one or more of the factors discussed above (e.g., the task associated with the request, the pick up and/or destination locations associated with the request, a level of service associated with the user and/or request, a demand for use of the autonomous vehicles, etc.).

As described above (e.g., with respect to FIGS. 18-20), the computer system 1300 can estimate a future demand for direct autonomous vehicles in a particular region, and direct autonomous vehicles to that location to meet the predicted future demand. In some embodiments, the computer system 1300 does so by repositioning autonomous vehicles from a region of relatively lower demand or estimated future demand to a region of relatively higher demand or estimated future demand.

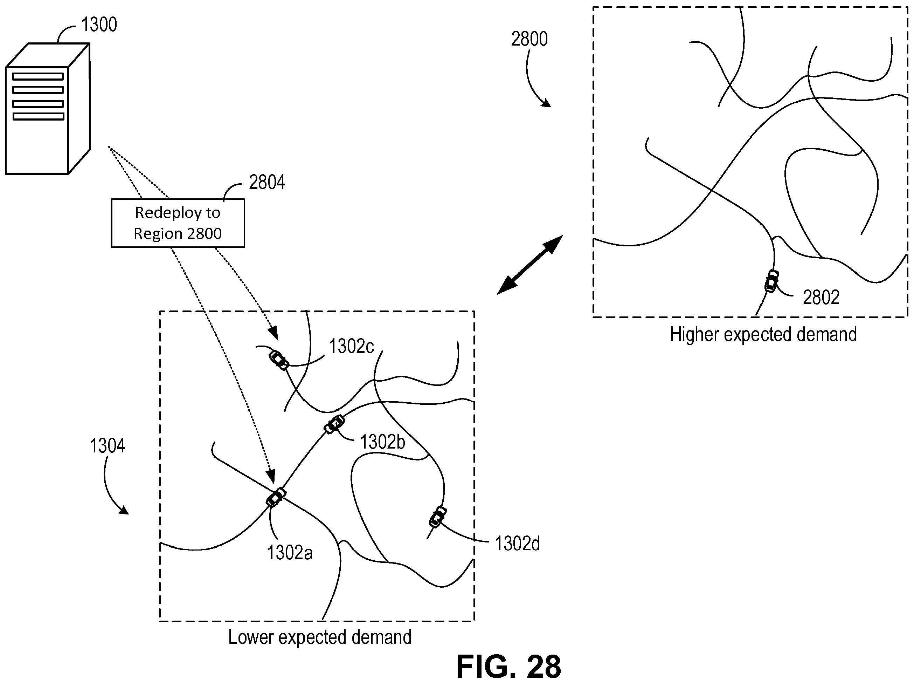

As an example, FIG. 28 shows a first region 1304 having several autonomous vehicles 1302a-d and a second region 2800 having an autonomous vehicle 2802. The different regions 1304 and 2800 can correspond to different political regions, different pre-defined regions, different transiently-defined region, and/or any other different regions.

In this example, the computer system 1300 has estimated that there will be a relatively lower future demand for use of autonomous vehicles in the first region 1304, and a relatively higher future demand for use of autonomous vehicles in the second region 2800 (e.g., based on a statistical model). Further, the computer system 1300 can determine that additional autonomous vehicles are required in the second region 2800 to fulfill the estimated demand in that region, while there are an excess of autonomous vehicles in the first region 1304 needed to fulfill the estimated demand in that region.

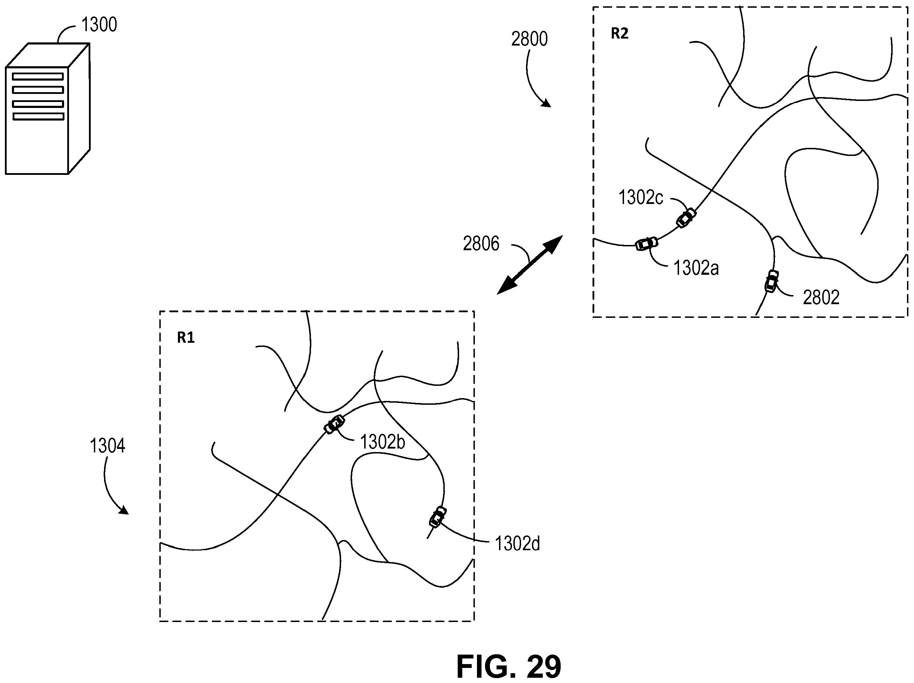

Based on this determination, the computer system 1300 transmits command signals 2804 to one or more of the autonomous vehicles in the region 1304 (e.g., the autonomous vehicles 1302a and 1302c) instructing them to navigate to the region 2800. As shown in FIG. 29, in response, the autonomous vehicles 1302a and 1302c transverse to the region 2800 (e.g., using a network of roads 2806 interconnecting the regions 1304 and 2800). Upon arrival, the repositioned autonomous vehicles 1302a and 1302c can be assigned one or more tasks within the region 2800 (e.g., transport users and/or cargo, roam along a particular path, idle at a particular location, charge its batteries at a charging station, receive maintenance at a service station, etc.).

As described above (e.g., with respect to FIGS. 13-16), a user can submit a request specifying a desired pick up location. In response, a computer system transmits a command signal instructing an autonomous vehicle to navigate to that pick up location. However, in some embodiments, the computer system identifies an alternative pick up location and suggest that location to the user. If the user accepts the alternative pick up location, the computer system can instruct both the user and the autonomous vehicle to meet at the alternative pick up location instead.

This can improve the effectiveness and efficiency of the fleet of autonomous vehicles. For example, a pick up location specified by a user may be unsafe or otherwise unsuitable for conducting pick ups (e.g., a location near a high volume of vehicle traffic, a location without a designed pick up area, a location near a fast flow of traffic, etc.). The computer system can determine a nearby alternative location that is safer for the user, and suggest that location for pick up instead.

As another example, a pick up location specified by a user may be relatively inefficient. For instance, the specified pick up location may require that an autonomous vehicle take a cumbersome path to reach the location (or the location may be entirely inaccessible by an autonomous vehicle). As another example, the specified pick up location may require that an autonomous vehicle take a detour from a direct path between the autonomous vehicle's current location and the user's desired destination. The computer system can determine a nearby alternative location that is more efficient, and suggest that location for pick up instead. For instance, the alternative location can be a location that is more accessible to vehicles and/or a location that requires that the autonomous vehicle take fewer, shorter, or quicker detours to transport the user to the specified destination.

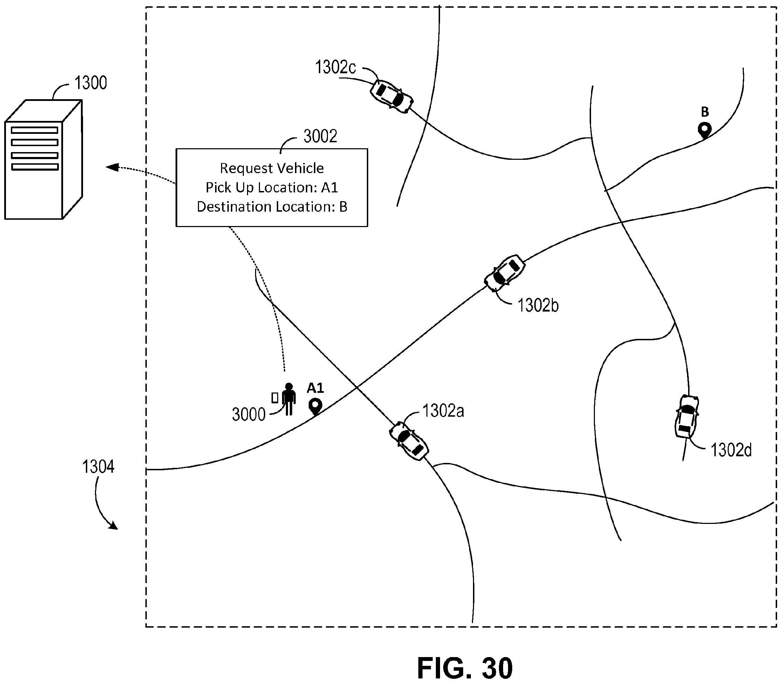

As an example, FIG. 30 shows a region 1304 having several autonomous vehicles 1302a-d. In this example, a user 3000 positioned at a location "A1" wishes to travel to a location "B" in an autonomous vehicle. To request an autonomous vehicle for use, the user 3000 transmits a request 3002 to the computer system 1300 (e.g., in a similar manner as described with respect to FIG. 13). For instance, the request 3002 can include one or more data items indicating the user's desired pick up location (e.g., the current location of the user or another pick up location specified by the user), a desired pick up time, and/or a desired destination location (e.g., a destination location specified by the user).

In a similar manner as described with respect to FIG. 14, responsive to the request 1308, the computer system 1300 selects one of the autonomous vehicles 1302a-d to fulfill the request. In this example, the computer system 1300 has selected autonomous vehicle 1302a.

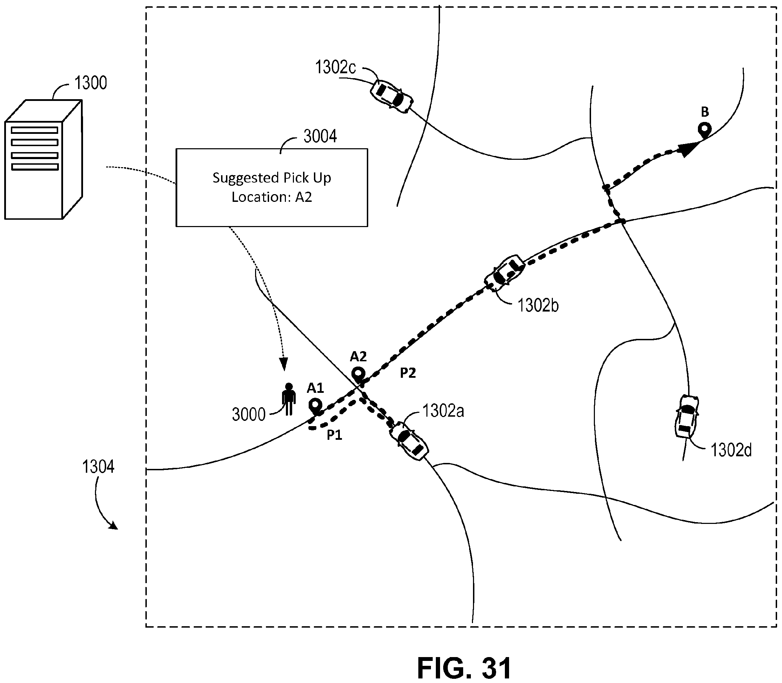

The computer system 1300 determines a path P1 for the autonomous vehicle 1302a to first navigate to the pick up location A1, and then transverse to the destination location B. However, as shown in FIG. 31, the path P1 is relatively inefficient, as it requires that the autonomous vehicle 1302a deviate from a direct path P2 to the destination B. As an alternative, the computer system 1300 determines an alternative pick up location A2 that is nearer to the direct path P2, and transmits a suggestion message 3004 to the user 3000 indicating the alternative location A2.

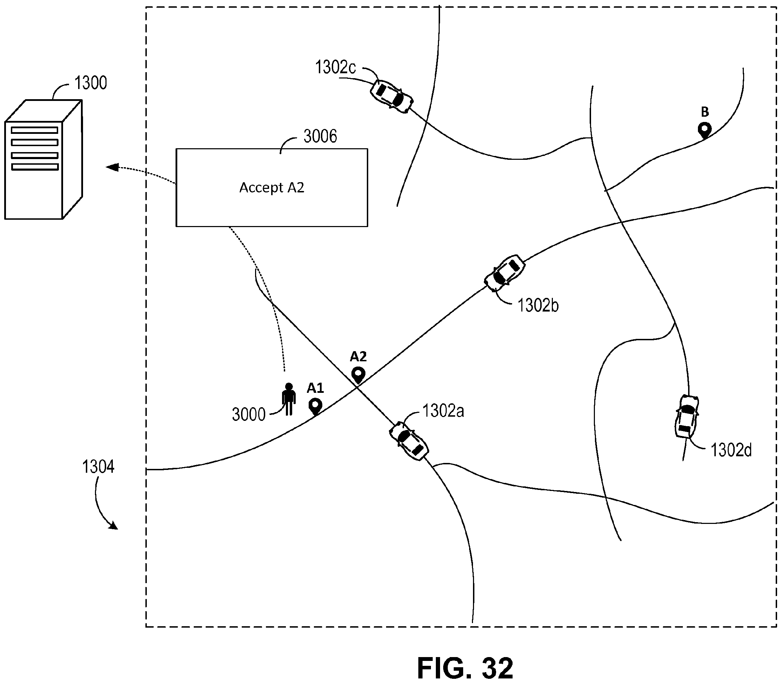

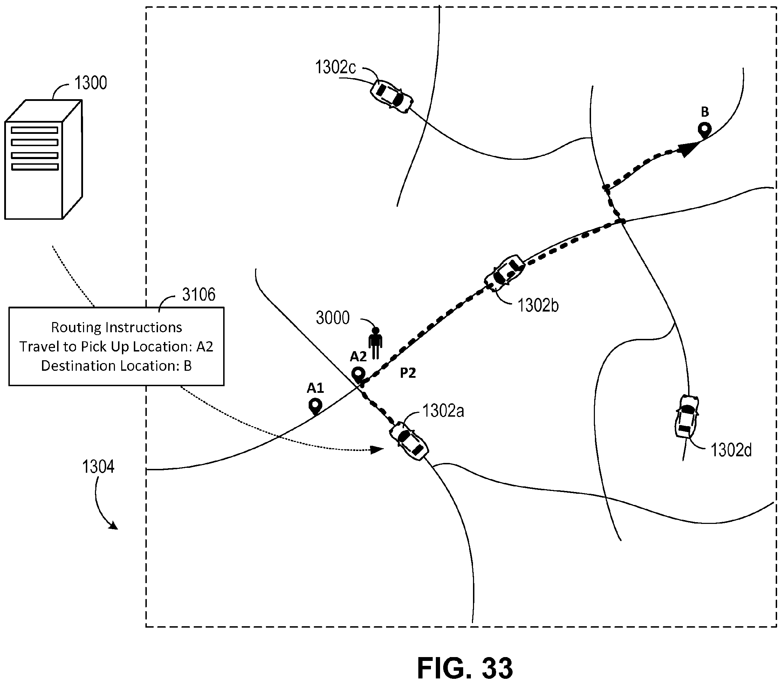

As shown in FIG. 32, the user can accept the alternative location A2 by transmitting a response message 3006 (e.g., indicating that the alternative location A2 is acceptable). As shown in FIG. 33, in response to the user's acceptance, the computer system 1300 transmits a command signal 3008 to the autonomous vehicle 1302a instructing the autonomous vehicle 1302a to fulfill the user's request by first picking up the user 3000 at the pick up location A2 (instead of at the originally specified location A2), and then transporting the user 3000 to the location B (e.g., along the path P2). As the user 3000 has been notified of the new pick up location A2, the user 3000 can travel to the new pick up location A2 to meet the autonomous vehicle 1302a.

In some embodiments, the computer system also identifies an alternative destination location and suggest that destination location to the user. If the user accepts the alternative destination up location, the computer system can instruct the autonomous vehicle to drop off the user at the alternative destination location instead.

This can also improve the effectiveness and efficiency of the fleet of autonomous vehicles. For example, a destination location specified by a user may be unsafe or otherwise unsuitable for conducting drop offs (e.g., a location near a high volume of vehicle traffic, a location without a designed pick up area, a location near a fast flow of traffic, etc.). The computer system can determine a nearby alternative location that is safer for the user, and suggest that location for drop offs instead.

As another example, a pick up location specified by a user may be relatively inefficient. For instance, the specified destination location may require that an autonomous vehicle take a cumbersome path to reach the location (or the location may be entirely inaccessible by an autonomous vehicle). The computer system can determine a nearby alternative location that is more efficient, and suggest that location for drop off instead. For instance, the alternative location can be a location that is more accessible to vehicles.

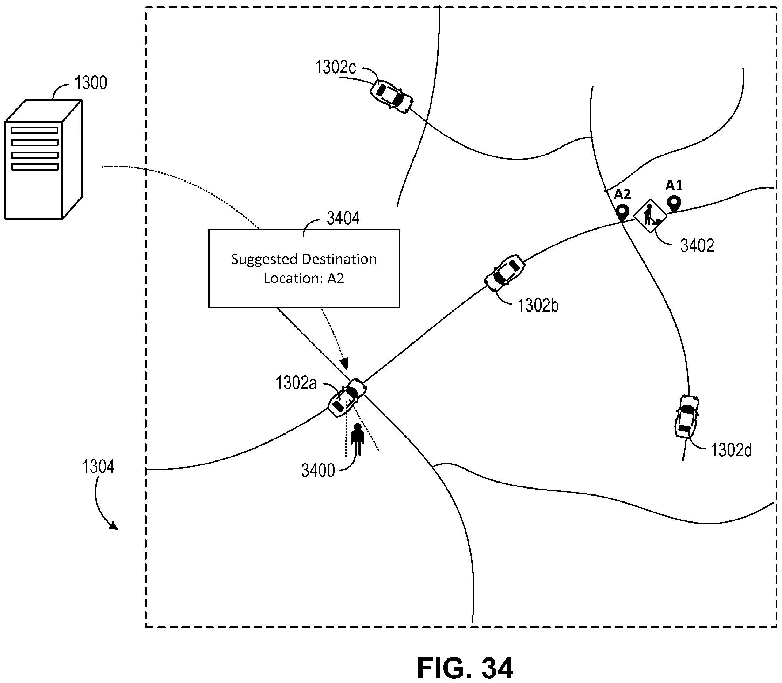

As an example, FIG. 34 shows a region 1304 having several autonomous vehicles 1302a-d. In this example, a user 3400 has boarded the autonomous vehicle 1302a and has specified that she wishes to be transported to a location A1.

However, the computer system 1300 determines that the path to the destination location A1 is obstructed by a construction zone 3402, and identifies an alternative destination location A2 for drop off of the user 3400 (e.g., an accessible location in proximity to the originally specified location A1). The computer system 1300 transmits a suggestion message 3404 to the user 3400 indicating the alternative location A2.

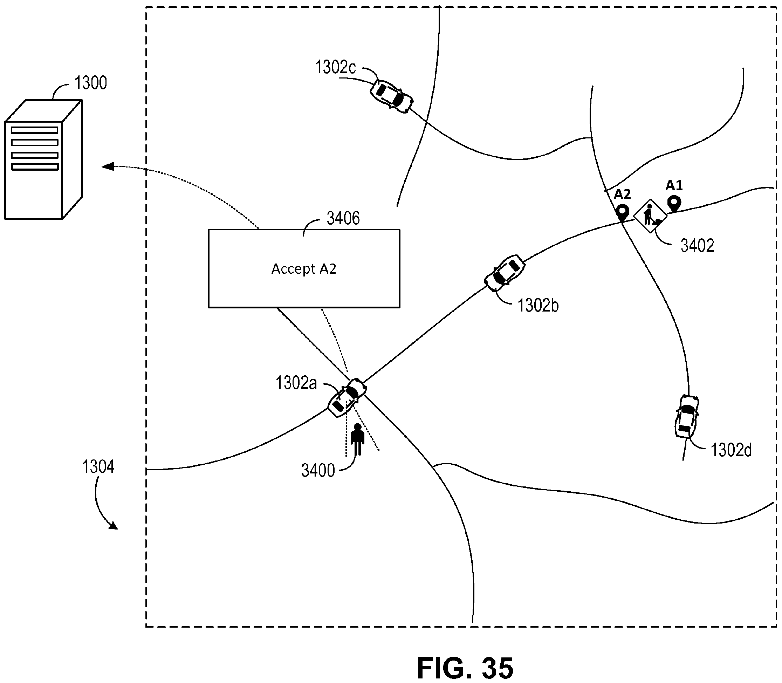

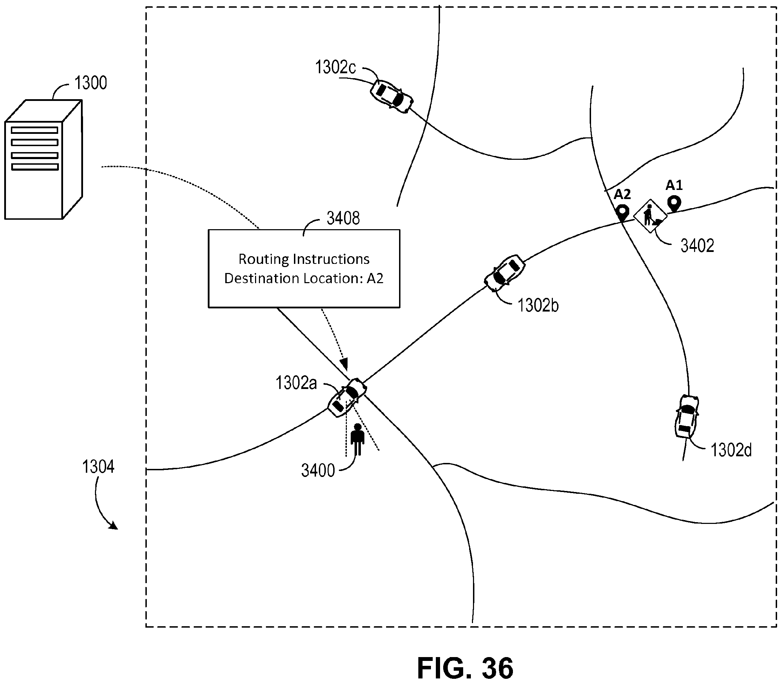

As shown in FIG. 35, the user can accept the alternative location A2 by transmitting a response message 3406 (e.g., indicating that the alternative location A2 is acceptable). The acceptance may be indicated though the user's mobile device or some other computer device that includes a suitable input device installed in the autonomous vehicle. As shown in FIG. 36, in response to the user's acceptance, the computer system 1300 transmits a command signal 3408 to the autonomous vehicle 1302a instructing the autonomous vehicle 1302a to transport the user 3400 to the location A2 (instead of the originally specified location A1). The user then disembarks at location A2.

In some embodiments, a computer system manages the operation of a fleet of autonomous vehicles in conjunction with one or more additional modes of transportation (e.g., trains, subways, boats, airplanes, biking, walking, etc.). For instance, a user can submit a request for transportation between two locations. In response, the computer system can determine whether an autonomous vehicle can transport the user at least a portion of the way between the two locations, and whether other modes of transportation can also be used to transport the user. Based on this information, the computer system can generate a travel itinerary for the user identifying one or more different modes of transportation to the user to travel between the two locations.

As an example, if an autonomous vehicle can transport the user the entirety of the way between the two locations, the computer system can generate an itinerary identifying the autonomous vehicle as the sole mode of transportation, and instruct the autonomous vehicle to pick up the user at the specified location and transport the user to the specified destination. The user can refer to the itinerary to ensure that she meets the autonomous vehicle at the appropriate time and place.

As another example, the computer system can generate an itinerary identifying the autonomous vehicle as a first mode of transportation for a first portion of the travel (e.g., between two waypoints defining a first leg of travel), and one or more other modes of transportation for other portions of the travel (e.g., between other waypoints defining other legs of travel). Further, the computer system can instruct the autonomous vehicle to pick up the user at a particular location (e.g., a first waypoint) and to transport the user to another location (e.g., a second waypoint). The user can refer to the itinerary to ensure that she meets the autonomous vehicle at the appropriate time and place to complete one leg of travel, and to correctly navigate using the other modes of transportation to complete the other legs of travel.

In some embodiments, the computer system generates a travel itinerary specifying multiple modes of transportation if an autonomous vehicle alone cannot transport the user the entirety of the way between the two locations (e.g., if the pick up location and/or the destination location is inaccessible to vehicles, or it is impractical to do so). In some embodiments, the computer system generates a travel itinerary specifying multiple modes of transportation if the resulting travel time is shorter than that of an autonomous vehicle alone. For instance, due to traffic congestion between two locations, an autonomous vehicle alone might require an hour to transport the user between two locations. However, the use of an autonomous vehicle for a first leg of travel and a subway for a second leg of travel might reduce the travel time by 20 minutes. To save the user time, the computer system can generate a travel itinerary identifying these two different legs to the user, and instruct the autonomous vehicle to transport the user in accordance with the itinerary.

In some embodiments, one or more modes of transportation are public transportation (e.g., modes of transportation provided at least in part by a governmental body or authority). Example forms of public transportation include buses, ferries, subways, and trains operated by a municipality, state, county, country, or other governmental body.

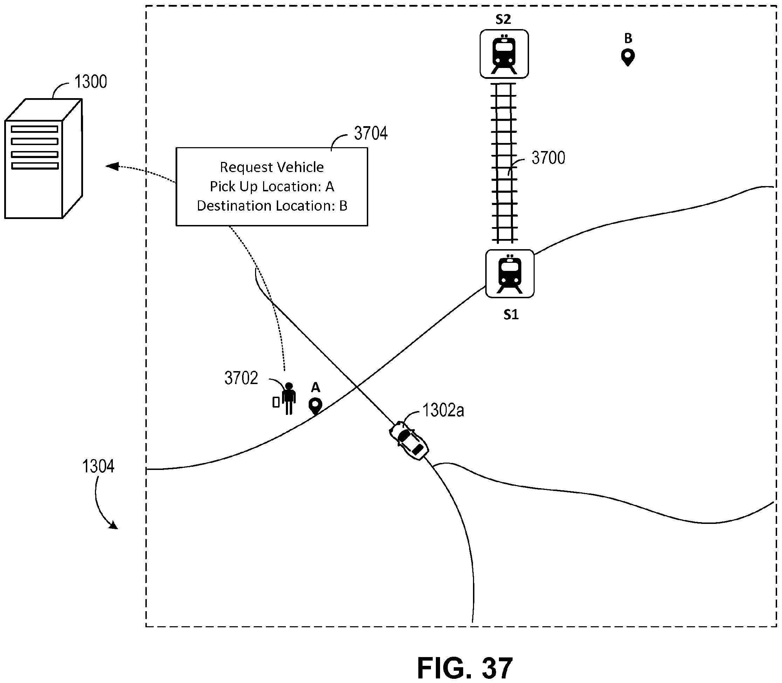

As an example, FIG. 37 shows a region 1304 having an autonomous vehicle 1302a. The region 1304 also includes two train stations S 1 and S2 interconnected by a rail network 3700.

In this example, a user 3702 positioned at a location "A" wishes to travel to a location "B" in an autonomous vehicle. To request an autonomous vehicle for use, the user 3702 transmits a request 3704 to the computer system 1300 (e.g., in a similar manner as described with respect to FIG. 13). For instance, the request 3704 can include one or more data items indicating the user's desired pick up location (e.g., the current location of the user or another pick up location specified by the user), a desired pick up time, and/or a desired destination location (e.g., a destination location specified by the user).

However, in this example, the autonomous vehicle 1302a cannot access the location B (e.g., due to a lack of contiguous roads between the locations A and B). The computer system 1300 determines that the autonomous vehicle 1302a alone is unable to transport the user, but determines that the user can successfully travel between locations A and B using a combination of an autonomous vehicle (e.g., from the location A to the station S1), a train (e.g., from the station S1 to the station S2), and walking (e.g., from the station S2 and the location B). This determination can be made, for example, using information collected by the computer system 1300 regarding each of the modes of transportation (e.g., based on user profile data, vehicle telemetry data, environmental data, event data, and other information).

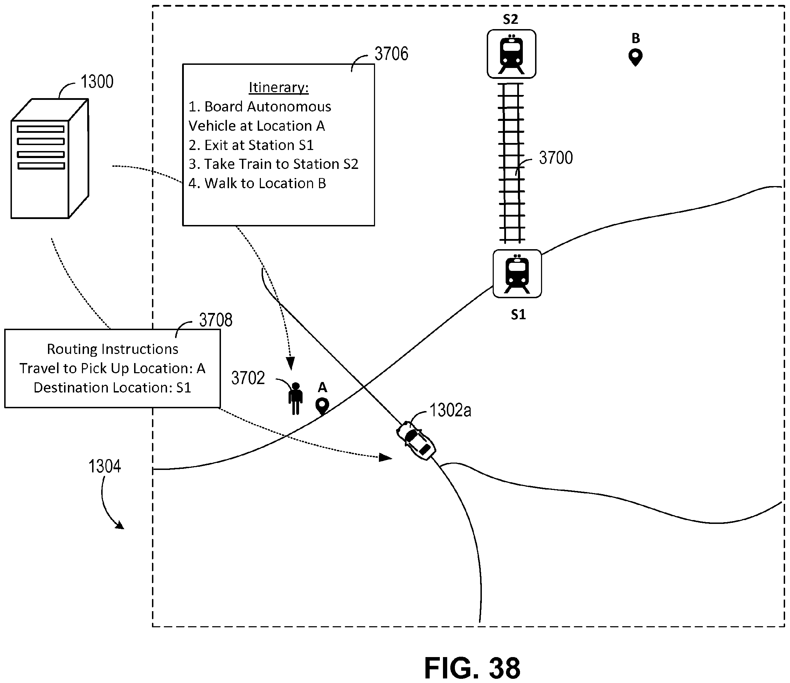

As shown in FIG. 38, based on this determination, the computer system 1300 generates a travel itinerary 3706 identifying, for each leg of travel, the mode of transportation used for that leg (e.g., autonomous vehicle, train, walking, etc.), and details regarding the leg of travel (e.g., a start point and end point for the leg, an estimated time of travel for the leg, an estimated start time and end time for the leg, etc.). This itinerary is transmitted to the user 3702 (e.g., to a mobile device of the user 3702) for reference during travel. Further, the computer system 1300 generates a command signal 3708 instructing the autonomous vehicle 1302a to fulfill a leg of the user's travel (e.g., instructions to pick up the user 3702 at the location A, and transport the user 3702 to the station S1). This is beneficial for example, as the user 3702 need not manually coordinate travel between multiple different modes of transportation, and can simply follow the instructions indicated on her travel itinerary 3706 to complete her travel.

As described herein, a computer system can assign various tasks to one or more autonomous vehicles (e.g., transporting users and/or cargo, repositioning to different regions, roaming, idling, etc.). In some embodiments, the autonomous vehicles automatically accepts each of the assigned tasks as they are received, and proceed to carry out the assigned tasks in an automated manner.

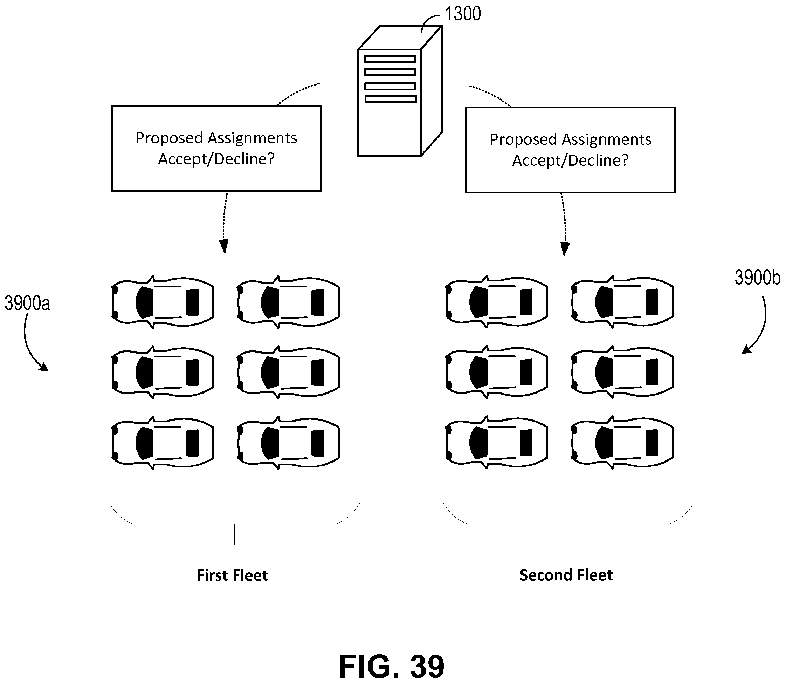

In some embodiments, one or more autonomous vehicles declines an assigned task. As an example, FIG. 39 shows a first fleet of autonomous vehicles 3900a and a second fleet of autonomous vehicles 3900b. The computer system 1300 can propose assignments to autonomous vehicles in each of the fleets, and allow the autonomous vehicles to accept or decline the tasks. In some embodiments, tasks are automatically accepted or declined based on certain conditions (e.g., logical rules defined by the operators of each fleet). In some embodiments, tasks are manually accepted or declined (e.g., based on human input).

In some embodiments, certain fleets of autonomous vehicles are prioritized for assignment over others. For instance, if the availability of autonomous vehicles from one fleet is sufficiently low (e.g., below a threshold level), autonomous vehicles from another fleet can be draw for service. As an example, a primary fleet can be assigned tasks to transport users and/or cargo in a particular region. If availability of autonomous vehicles from the primary fleet is sufficiently low, additional autonomous vehicles from a secondary fleet can be draw for service to meet the demand.

In some embodiments, different fleets of autonomous vehicles are controlled, operated, maintained, and/or operated by different business entities. For instance, several different business entities can each operate one or more autonomous vehicles in a particular region. A computer system 1300 can coordinate the operation of the autonomous vehicles across each of the fleets (e.g., to automatically assign tasks of each of the autonomous vehicles), while allowing each of the business entities individual control over the autonomous vehicles of its respective fleet (e.g., to accept or decline assigned tasks as desired).

### Example Processes for Controlling the Operation of a Fleet of Autonomous Vehicles

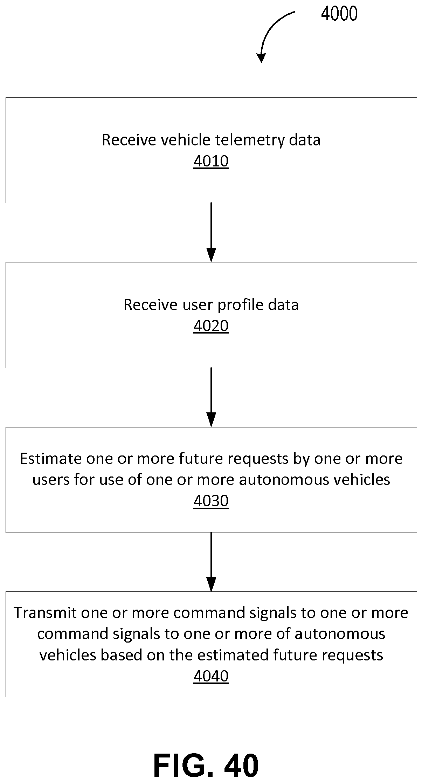

FIG. 40 shows an example process 4000 for controlling the operation of a fleet of autonomous vehicles. The process 4000 can be performed, at least in part, using one or more of the systems described herein (e.g., using one or more computer systems, AV systems, autonomous vehicles, etc.).

In the process 4000, a computer system receives vehicle telemetry data (step 4010). The vehicle telemetry data indicates a respective geographical location of each autonomous vehicle of a plurality of autonomous vehicles. Various examples of vehicle telemetry data are described herein. As an examples, vehicle telemetry data can include an indication of a speed of an autonomous vehicle of the plurality of autonomous vehicles, an indication of a location of an autonomous vehicle of the plurality of autonomous vehicles, an indication of a heading of an autonomous vehicle of the plurality of autonomous vehicles, and/or an indication of a route of an autonomous vehicle of the plurality of autonomous vehicles.

The computer system also receives user profile data (step 4020). The user profile data indicates a respective geographical location of each user of a plurality of users. Various examples of user profile data are described herein. As examples, user profile data can include an indication of a location of a user of the plurality of users, an indication of a travel history of a user of the plurality of users, an indication of a demographic one or more demographic indicators of a user of the plurality of users, an indication of a preference of a user of the plurality of users, and/or an indication of a trend associated with a user of the plurality of users.

The compute system estimates one or more future requests by one or more of the users for use of one or more of the autonomous vehicles based on the user profile data (step 4030). Each estimated future request is associated with a respective geographical location and a respective time. Various techniques for estimating future requests are described herein. For example, future requests can be estimated using a predictive model of a future demand for use of one or more of the autonomous vehicles (e.g., a statistical model, such as a Bayesian model). The predictive model can be generated based on user profile data, vehicle telemetry data, event information, and any other information collected by the computer system. In some embodiments, one or more future requests are estimated based on event information indicating an occurrence or predicted occurrence of one or more events (e.g., civic events, road construction, traffic patterns, weather events, etc.). In some embodiments, one or more future requests are estimated based on a current demand for use of one or more of the autonomous vehicles.

The computer transmits one or more command signals to one or more autonomous vehicles based on one or more of the estimated future requests (step 4040). Each command signal includes instructions for a respective autonomous vehicle to navigate to a respective geographical location at a respective time. In some embodiments, a command signal includes instructions to an autonomous vehicle to navigate to a location associated with a user, an idling location, a geographical region different from a current geographical region of the autonomous vehicle, a location associated with a package, or a location associated with an electrical charging station.

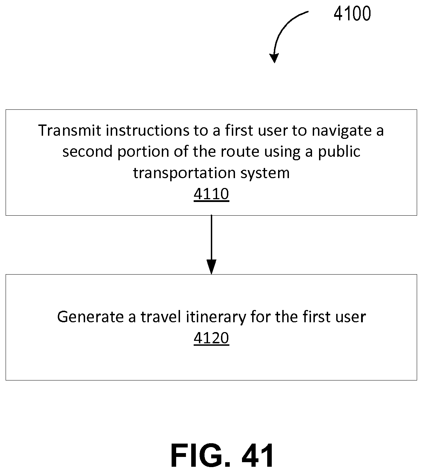

In some embodiments, a command signal includes instructions for a first autonomous vehicle to convey a first user along a first portion of a route to a destination requested by the first user. Further, as shown in FIG. 41, the computer system can transmit instructions to the first user to navigate a second portion of the route using a public transportation system (e.g., a public bus, a subway, a train, etc.) (step 4110). In some embodiments, the computer system also generates a travel itinerary for the first user (step 4120). The travel itinerary can include instructions to the first user to navigate the first portion of the route using the first autonomous vehicle, and instructions to the first user to navigate the second portion of the route using the public transportation system.

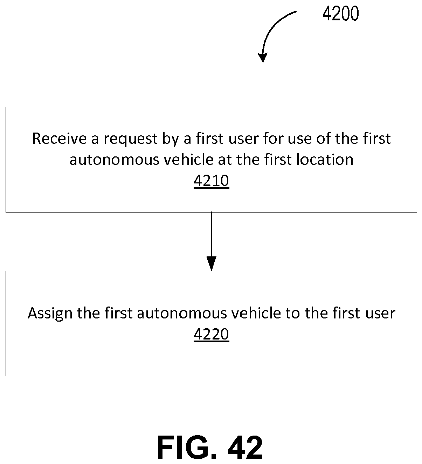

In some embodiments, a command signal includes instructions to a first autonomous vehicle to idle at a first location (e.g., an idling location to await passengers). Further, as shown in FIG. 42, the computer system receives a request by a first user for use of the first autonomous vehicle at the first location (e.g., a request including an identifier of the autonomous vehicle, such as a serial number, name, or QR code) (step 4210). Responsive to receiving the request, the computer system can assign the first autonomous vehicle to the first user (step 4220).

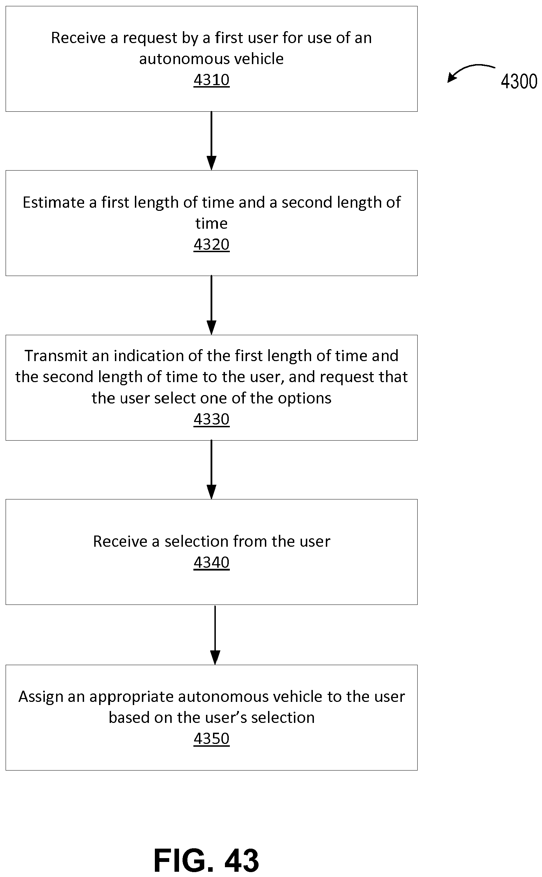

In some embodiments, when a user requests use of an autonomous vehicle, the computer system offers the user a choice between a shared or carpooled ride (e.g., shared use of an autonomous vehicle with other users), or a dedicated ride (e.g., use of an autonomous vehicle assigned for exclusive use by the user). For example, as shown in FIG. 43, the computer system can receive a request by a first user for use of an autonomous vehicle (step 4310). In response, the computer system can estimate a first length of time associated with assigning a first autonomous vehicle for exclusive use of the first user and fulfilling the request using the first autonomous vehicle (e.g., a dedicated ride), and a second length of time associated with assigning a second autonomous vehicle for shared use between the first user and one or more additional users and fulfilling the request using the second autonomous vehicle (e.g., a shared ride) (step 4320). The computer system can transmit an indication of the first length of time and the second length of time to the user, and request that the user select one of the options (step 4330). Upon receiving a selection (step 4340), the computer system can assign an appropriate autonomous vehicle to the user (e.g., a shared ride or carpooled ride) to fulfil the user's request (step 4350).

In some embodiments, the computer system prompts a customer for an alternative drop off location (e.g., during a trip, such as when the autonomous vehicle is nearing the selected destination). For example, a computer system can determine that a first autonomous vehicle is conveying a first user to a first destination requested by the first user, and determining that navigating to a second destination different from the first destination increases an efficiency of an operation of the first autonomous vehicle (e.g., a location is easier for the autonomous vehicle to reach). The computer system can transmit an indication of the second destination for display to the first user, and request that the user accept or decline the suggested second destination. Upon receiving an input from the first user accepting the second destination, the computer system can transmit one or more command signals to the first autonomous vehicle (e.g., instructing the first autonomous vehicle to traverse navigate to the second destination instead of the first destination).

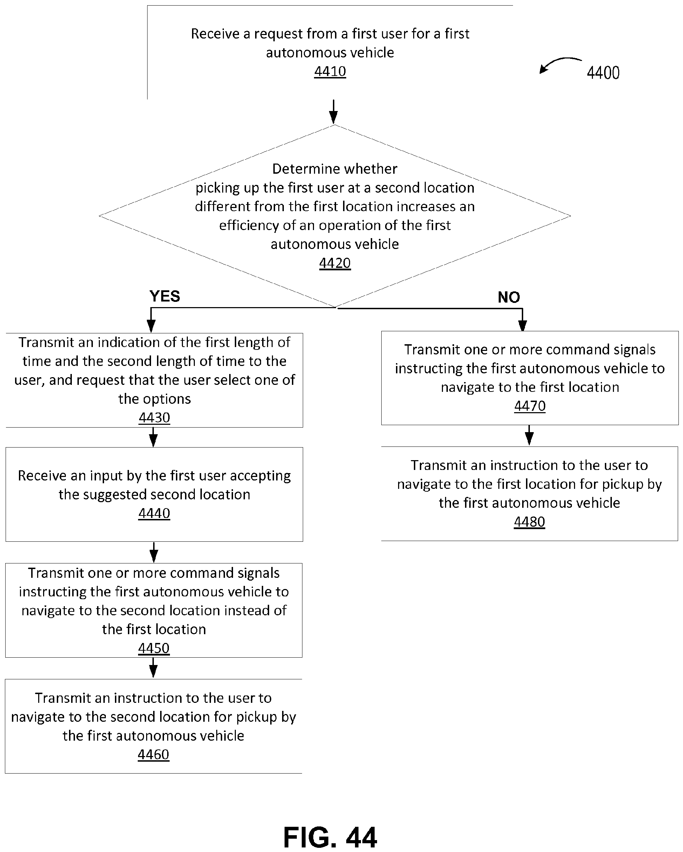

In some embodiments, the computer system prompts a customer for an alternative pick up location (e.g., prior to picking up the user to commence a trip). As an example, as shown in FIG. 44, a computer system can receive a request from a first user for a first autonomous vehicle (step 4410). The request can include an indication of a first location of the first user (e.g., a desired or proposed pick up location). The computer system can determine whether picking up the user at a second location different from the first location increases an efficiency of an operation of the first autonomous vehicle (e.g., a location is easier for the autonomous vehicle to reach) (step 4420). If so, the computer system can transmit an indication of the second location to the user, and request that the user accept or decline the suggested second location (step 4430). Upon receiving an input by the first user accepting the suggested second location (step 4440), the computer system can transmit one or more command signals instructing the first autonomous vehicle to navigate to the second location instead of the first location (step 4450). Further, the computer system can transmit an instruction to the user to navigate to the second location for pickup by the first autonomous vehicle (step 4460). Alternative, if picking up the user at the second location different does not increase an efficiency of an operation of the first autonomous vehicle, the computer system can transmit one or more command signals instructing the first autonomous vehicle to navigate to the first location (step 4470). Further, the computer system can transmit an instruction to the user to navigate to the first location for pickup by the first autonomous vehicle (step 4480).

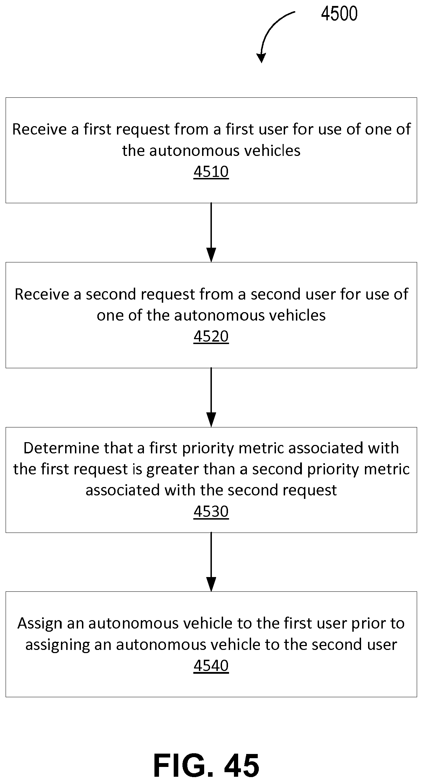

In some embodiments, autonomous vehicles are assigned according to certain priority factors or rules. Further instance, in some embodiments users can be associated with a level of service that provides priority service with reduced wait time and priority queueing. As an example, as shown in FIG. 45, the computer system can receive a first request from a first user for use of one of the autonomous vehicles (step 4510). The first request can be associated with a first priority metric (e.g., a score or rank indicating the priority of a request or user relative to other requests or users). The computer system can also receive a second request from a second user for use of one of the autonomous vehicles (step 4520). The second request can be associated with a second priority metric. Upon determining that the first priority metric is greater than the second priority metric (e.g., the first request has a higher priority than the second request) (step 4530), the computer system can assign an autonomous vehicle to the first user prior to assigning an autonomous vehicle to the second user (step 4540).

In the foregoing description, embodiments of the invention have been described with reference to numerous specific details that may vary from implementation to implementation. The description and drawings are, accordingly, to be regarded in an illustrative rather than a restrictive sense. The sole and exclusive indicator of the scope of the invention, and what is intended by the applicants to be the scope of the invention, is the literal scope of the set of claims that issue from this application. Any definitions expressly set forth herein for terms contained in such claims shall govern the meaning of such terms as used in the claims. In addition, when we use the term "further comprising," in the foregoing description or following claims, what follows this phrase is an additional step or entity, or a sub-step/sub-entity of a previously-recited step or entity.

## Claims

1. A method (4000), comprising:
receiving (4010) vehicle telemetry data at a computer system (1300), the vehicle telemetry data indicating a respective geographical location of each autonomous vehicle of a plurality of autonomous vehicles (1302a-d);
receiving (4020) user profile data at the computer system, the user profile data indicating a respective geographical location of each user of a plurality of users (1306, 1800a-d, 2100a-d, 2304, 3000, 3400, 3702);
estimating (4030), at the computer system based on the user profile data, one or more future requests by one or more of the users for use of one or more of the autonomous vehicles, each estimated future request being associated with a respective geographical location and a respective time; and
transmitting (4040), from the computer system, one or more command signals to one or more of the autonomous vehicles based on the one or more estimated future requests, each command signal comprising instructions for a respective autonomous vehicle to navigate to a respective geographical location at a respective time;
**characterized in that** said method further comprises:
receiving (4410), at the computer system, a request (3002) from a first user for a first autonomous vehicle, the request comprising an indication of a first location of the first user;
determining (4420), by the computer system, that picking up the user at a second location different from the first location increases an efficiency of an operation of the first autonomous vehicle;
in accordance with the determination, transmitting (4430), from the computer system to the first user, an indication (3004) of the second location;
receiving (4440), at the computer system from the first user, an input (3006) by the first user accepting the second location; and
responsive to receiving the input by the first user:
transmitting (4450), from the computer system to the first autonomous vehicle, one or more command signals (3106) instructing the first autonomous vehicle to navigate to the second location instead of the first location, and
transmitting (4460), from the computer system to the first user, an

2. The method (4000) of claim 1, wherein the vehicle telemetry data comprises an indication of one or more of
a speed of an autonomous vehicle of the plurality of autonomous vehicles,
a location of an autonomous vehicle of the plurality of autonomous vehicles,
a heading of an autonomous vehicle of the plurality of autonomous vehicles, and a route of an autonomous vehicle of the plurality of autonomous vehicles.

3. The method (4000) of any one of the preceding claims, wherein the user profile data comprises one or more of
an indication of a location of a user of the plurality of users,
an indication of a travel history of a user of the plurality of users,
one or more demographic indicators of a user of the plurality of users,
an indication of a preference of a user of the plurality of users, and
an indication of a trend associated with a user of the plurality of users.

4. The method (4000) of any one of the preceding claims, wherein the one or more command signals comprise instructions to an autonomous vehicle of the plurality of autonomous vehicles to navigate to one or more of
a location associated with a user of the plurality of users, an idling location,
a geographical region different from a current geographical region of the autonomous vehicle,
a location associated with a package, and a location associated with an electrical charging station.

5. The method (4000) of any one of the preceding claims, wherein the one or more future requests are estimated based on one or more of
a predictive model of a future demand for use of one or more of the autonomous vehicles, event information indicating an occurrence or predicted occurrence of one or more events, and
a current demand for use of one or more of the autonomous vehicles.

6. The method (4000) of any one of the preceding claims, wherein the one or more command signals comprise instructions for a first autonomous vehicle to convey a first user along a first portion of a route to a destination requested by the first user, and wherein the method (4100) further comprises transmitting (4110), from the computer system, instructions to the first user to navigate a second portion of the route using a public transportation system.

7. The method (4000) of claim 6, further comprising generating (4120) a travel itinerary for the first user, and wherein the travel itinerary includes instructions to the first user to navigate the first portion of the route using the first autonomous vehicle, and instructions to the first user to navigate the second portion of the route using the public transportation system.

8. The method (4000) of any one of the preceding claims, wherein the one or more command signals comprise instructions (2302) to a first autonomous vehicle to idle at a first location; and
wherein the method (4000) further comprises:
receiving (4210), at the computer system, a request (2306) by a first user for use of the first autonomous vehicle at the first location, and
responsive to receiving the request by the first user, assigning (4220) the first autonomous vehicle to the first user.

9. The method (4000) of any one of the preceding claims, further comprising: receiving (4310), at the computer system, a request by a first user for use of an autonomous vehicle;
estimating (4320), at the computer system, a first length of time associated with assigning a first autonomous vehicle of the plurality of autonomous vehicles for exclusive use of the first user and fulfilling the request using the first autonomous vehicle;
estimating (4320), at the computer system, a second length of time associated with assigning a second autonomous vehicle of the plurality of autonomous vehicles for shared use between the first user and one or more additional users and fulfilling the request using the second autonomous vehicle; and
transmitting (4330), using the computer system, an indication of the first length of time and the second length of time to the user.

10. The method (4000) of claim 9, further comprising:
receiving (4340), at the computer system, an input from the first user selecting one of the first autonomous vehicle or the second autonomous vehicle; and responsive to receiving the input from the first user, assigning (4350) the selected first autonomous vehicle or second autonomous vehicle to fulfill the request.

11. The method (4000) of any one of the preceding claims, further comprising:
determining, by the computer system, that a first autonomous vehicle is conveying a first user to a first destination requested by the first user;
determining, by the computer system, that navigating to a second destination different from the first destination increases an efficiency of an operation of the first autonomous vehicle;
transmitting, from the computer system to the first autonomous vehicle, an indication (3404) of the second destination for display to the first user;
receiving, at the computer system from the first autonomous vehicle, an input (3406) by the first user accepting the second destination; and
responsive to receiving the input by the first user, transmitting, from the computer system to the first autonomous vehicle, one or more command signals (3408) instructing the first autonomous vehicle to navigate to the second destination instead of the first destination.

12. The method (4000) of claim 11, further comprising:
determining that a first drop-off location corresponding to the first destination is unsafe or unsuitable for the user, preferably wherein the first drop-off location is one of a location near a high volume of vehicle traffic, a location without a designed pick-up area, and a location near a fast flow of traffic;
determining an alternative drop-off location to the first location, wherein the alternative drop-off location is safer or more suitable for the user; and
selecting the alternative drop-off location as the second destination.

13. The method (4000) of any one of the preceding claims, wherein determining (4420), by the computer system, that picking up the user at the second location different from the first location increases an efficiency of an operation of the first autonomous vehicle comprises one or more of
determining that picking up the user at the first location requires that the first autonomous vehicle take a cumbersome path to reach the first location,
determining that the first location is inaccessible by the first autonomous vehicle, and
determining that picking up the user at the first location requires that the first autonomous vehicle take a detour from a direct path between a current location of the first autonomous vehicle current location and a destination specified by the user.

14. The method (4000) of any one of the preceding claims, wherein the second location is more accessible to vehicles than the first location and/or navigating to the second location requires that the first autonomous vehicle take fewer, shorter, or quicker detours to transport the user to a destination specified by the user.

15. The method (4000) of any one of the preceding claims, further comprising:
receiving (4510), at the computer system, a first request from a first user for use of one of the autonomous vehicles, the first request being associated with a first priority metric;
receiving (4520), at the computer system, a second request from a second user for use of one of the autonomous vehicles, the second request being associated with a second priority metric;
determining (4530), by the computer system, that the first priority metric is greater than the second priority metric; and
responsive to determining that the first priority metric is greater than the second priority metric, assigning (4540) an autonomous vehicle to the first user prior to assigning an autonomous vehicle to the second user.

16. A first device comprising:
one or more processors; memory; and
one or more programs stored in memory, the one or more programs including instructions for performing the method (4000) of any one of claims 1-15.

17. A non-transitory computer-readable storage medium comprising one or more programs for execution by one or more processors of a first device, the one or more programs including instructions which, when executed by the one or more processors, cause the first device to perform the method (4000) of any one of claims 1-15.

## Patentansprüche

1. Verfahren (4000), umfassend:
Empfangen (4010) von Fahrzeugtelemetriedaten an einem Computersystem (1300), wobei die Fahrzeugtelemetriedaten einen jeweiligen geografischen Standort jedes autonomen Fahrzeugs einer Vielzahl autonomer Fahrzeuge (1302a-d) angeben;
Empfangen (4020) von Benutzerprofildaten am Computersystem, wobei die Benutzerprofildaten einen jeweiligen geografischen Standort jedes Benutzers einer Vielzahl von Benutzern (1306, 1800a-d, 2100a-d, 2304, 3000, 3400, 3702) angeben;
Schätzen (4030), am Computersystem basierend auf den Benutzerprofildaten, einer oder mehrerer zukünftiger Anforderungen durch einen oder mehrere der Benutzer zur Verwendung eines oder mehrerer der autonomen Fahrzeuge, wobei jede geschätzte zukünftige Anforderung mit einem jeweiligen geografischen Standort und einer jeweiligen Zeit assoziiert ist; und
Übertragen (4040), vom Computersystem, eines oder mehrerer Befehlssignale an ein oder mehrere der autonomen Fahrzeuge basierend auf der einen oder den mehreren geschätzten zukünftigen Anforderungen, wobei jedes Befehlssignal Anweisungen für ein jeweiliges autonomes Fahrzeug, zu einer jeweiligen Zeit zu einem jeweiligen geografischen Standort zu navigieren, umfasst;
**dadurch gekennzeichnet, dass** das Verfahren ferner umfasst:
Empfangen (4410), am Computersystem, einer Anforderung (3002) von einem ersten Benutzer für ein erstes autonomes Fahrzeug, wobei die Anforderung eine Angabe eines ersten Standorts des ersten Benutzers umfasst;
Bestimmen (4420), durch das Computersystem, dass das Abholen des Benutzers an einem zweiten Standort, der sich vom ersten Standort unterscheidet, eine Effizienz eines Betriebs des ersten autonomen Fahrzeugs erhöht;
gemäß der Bestimmung, Übertragen (4430), vom Computersystem an den ersten Benutzer, einer Angabe (3004) des zweiten Standorts;
Empfangen (4440), am Computersystem vom ersten Benutzer, einer Eingabe (3006) durch den ersten Benutzer, die den zweiten Standort akzeptiert; und
als Reaktion auf das Empfangen der Eingabe durch den ersten Benutzer:
Übertragen (4450), vom Computersystem an das erste autonome Fahrzeug, eines oder mehrerer Befehlssignale (3106), die das erste autonome Fahrzeug anweisen, zu dem zweiten Standort anstelle des ersten Standorts zu navigieren, und
Übertragen (4460), vom Computersystem an den ersten Benutzer, einer Anweisung, zur Abholung durch das erste autonome Fahrzeug zu dem zweiten Standort zu navigieren.

2. Verfahren (4000) nach Anspruch 1, wobei die Fahrzeugtelemetriedaten eine Angabe von einem oder mehreren von Folgendem umfassen:
eine Geschwindigkeit eines autonomen Fahrzeugs der Vielzahl autonomer Fahrzeuge,
einen Standort eines autonomen Fahrzeugs der Vielzahl autonomer Fahrzeuge,
einen Kurs eines autonomen Fahrzeugs der Vielzahl autonomer Fahrzeuge und eine Route eines autonomen Fahrzeugs der Vielzahl autonomer Fahrzeuge.

3. Verfahren (4000) nach einem der vorstehenden Ansprüche, wobei die Benutzerprofildaten eines oder mehrere von Folgendem umfassen:
eine Angabe eines Standorts eines Benutzers der Vielzahl von Benutzern,
eine Angabe einer Reisehistorie eines Benutzers der Vielzahl von Benutzern,
einen oder mehrere demografische Indikatoren eines Benutzers der Vielzahl von Benutzern,
eine Angabe einer Präferenz eines Benutzers der Vielzahl von Benutzern, und
eine Angabe eines Trends, der mit einem Benutzer der Vielzahl von Benutzern assoziiert ist.

4. Verfahren (4000) nach einem der vorstehenden Ansprüche, wobei das eine oder die mehreren Befehlssignale Anweisungen an ein autonomes Fahrzeug der Vielzahl autonomer Fahrzeuge umfassen, zu einem oder mehreren von Folgendem zu navigieren:
einen Standort, der mit einem Benutzer der Vielzahl von Benutzern assoziiert ist, einen Warteort,
ein geografisches Gebiet, das sich vom aktuellen geografischen Gebiet des autonomen Fahrzeugs unterscheidet,
einen Standort, der mit einem Paket assoziiert ist, und einen Standort, der mit einer elektrischen Ladestation assoziiert ist.

5. Verfahren (4000) nach einem der vorstehenden Ansprüche, wobei die eine oder die mehreren zukünftigen Anforderungen basierend auf einem oder mehreren von Folgendem geschätzt werden:
ein prädiktives Modell eines zukünftigen Bedarfs zur Verwendung eines oder mehrerer der autonomen Fahrzeuge, Ereignisinformationen, die ein Auftreten oder vorhergesagtes Auftreten eines oder mehrerer Ereignisse angeben, und
ein aktueller Bedarf zur Verwendung eines oder mehrerer der autonomen Fahrzeuge.

6. Verfahren (4000) nach einem der vorstehenden Ansprüche, wobei das eine oder die mehreren Befehlssignale Anweisungen für ein erstes autonomes Fahrzeug, einen ersten Benutzer entlang eines ersten Abschnitts einer Route zu einem durch den ersten Benutzer angeforderten Zielort zu befördern, umfassen, und wobei das Verfahren (4100) ferner Übertragen (4110), vom Computersystem, von Anweisungen an den ersten Benutzer, unter Verwendung eines öffentlichen Transportsystems zu einem zweiten Abschnitt der Route zu navigieren, umfasst.

7. Verfahren (4000) nach Anspruch 6, ferner umfassend Erzeugen (4120) eines Reiseplans für den ersten Benutzer, und wobei der Reiseplan Anweisungen an den ersten Benutzer, unter Verwendung des ersten autonomen Fahrzeugs zu dem ersten Abschnitt der Route zu navigieren, und Anweisungen an den ersten Benutzer, unter Verwendung des öffentlichen Transportsystems zu dem zweiten Abschnitt der Route zu navigieren, beinhaltet.

8. Verfahren (4000) nach einem der vorstehenden Ansprüche, wobei das eine oder die mehreren Befehlssignale Anweisungen (2302) an ein erstes autonomes Fahrzeug, an einem ersten Standort zu warten, umfassen; und
wobei das Verfahren (4000) ferner umfasst:
Empfangen (4210), am Computersystem, einer Anforderung (2306) durch einen ersten Benutzer zur Verwendung des ersten autonomen Fahrzeugs am ersten Standort, und
als Reaktion auf das Empfangen der Anforderung durch den ersten Benutzer, Zuweisen (4220) des ersten autonomen Fahrzeugs zu dem ersten Benutzer.

9. Verfahren (4000) nach einem der vorstehenden Ansprüche, ferner umfassend: Empfangen (4310), am Computersystem, einer Anforderung durch einen ersten Benutzer zur Verwendung eines autonomen Fahrzeugs;
Schätzen (4320), am Computersystem, einer ersten Zeitdauer, die mit dem Zuweisen eines ersten autonomen Fahrzeugs der Vielzahl autonomer Fahrzeuge zur ausschließlichen Verwendung des ersten Benutzers und Erfüllen der Anforderung unter Verwendung des ersten autonomen Fahrzeugs assoziiert ist;
Schätzen (4320), am Computersystem, einer zweiten Zeitdauer, die mit dem Zuweisen eines zweiten autonomen Fahrzeugs der Vielzahl autonomer Fahrzeuge zur gemeinsamen Verwendung zwischen dem ersten Benutzer und einem oder mehreren zusätzlichen Benutzern und Erfüllen der Anforderung unter Verwendung des zweiten autonomen Fahrzeugs assoziiert ist; und
Übertragen (4330), unter Verwendung des Computersystems, einer Angabe der ersten Zeitdauer und der zweiten Zeitdauer an den Benutzer.

10. Verfahren (4000) nach Anspruch 9, ferner umfassend:
Empfangen (4340), am Computersystem, einer Eingabe vom ersten Benutzer, der eines des ersten autonomen Fahrzeugs oder des zweiten autonomen Fahrzeugs auswählt; und
als Reaktion auf das Empfangen der Eingabe vom ersten Benutzer, Zuweisen (4350) des ausgewählten ersten autonomen Fahrzeugs oder zweiten autonomen Fahrzeugs, um die Anforderung zu erfüllen.

11. Verfahren (4000) nach einem der vorstehenden Ansprüche, ferner umfassend:
Bestimmen, durch das Computersystem, dass ein erstes autonomes Fahrzeug einen ersten Benutzer zu einem durch den ersten Benutzer angeforderten ersten Zielort befördert;
Bestimmen, durch das Computersystem, dass das Navigieren zu einem zweiten Zielort, der sich vom ersten Zielort unterscheidet, eine Effizienz eines Betriebs des ersten autonomen Fahrzeugs erhöht;
Übertragen, vom Computersystem an das erste autonome Fahrzeug, einer Angabe (3404) des zweiten Zielorts zur Anzeige für den ersten Benutzer;
Empfangen, am Computersystem vom ersten autonomen Fahrzeug, einer Eingabe (3406) durch den ersten Benutzer, die den zweiten Zielort akzeptiert; und
als Reaktion auf das Empfangen der Eingabe durch den ersten Benutzer, Übertragen, vom Computersystem an das erste autonome Fahrzeug, eines oder mehrerer Befehlssignale (3408), die das erste autonome Fahrzeug anweisen, zu dem zweiten Zielort anstelle des ersten Zielorts zu navigieren.

12. Verfahren (4000) nach Anspruch 11, ferner umfassend:
Bestimmen, dass ein erster Absetzort, der dem ersten Zielort entspricht, für den Benutzer unsicher oder ungeeignet ist, vorzugsweise wobei der erste Absetzort einer von einem Standort in der Nähe eines hohen Verkehrsaufkommens, einem Standort ohne einen designierten Abholbereich und einem Standort in der Nähe eines schnellen Verkehrsflusses ist;
Bestimmen eines alternativen Absetzortes zu dem ersten Standort, wobei der alternative Absetzort für den Benutzer sicherer oder geeigneter ist; und
Auswählen des alternativen Absetzorts als den zweiten Zielort.

13. Verfahren (4000) nach einem der vorstehenden Ansprüche, wobei das Bestimmen (4420), durch das Computersystem, dass das Abholen des Benutzers am zweiten Standort, der sich vom ersten Standort unterscheidet, eine Effizienz eines Betriebs des ersten autonomen Fahrzeugs erhöht, eines oder mehrere von Folgendem umfasst:
Bestimmen, dass das Abholen des Benutzers am ersten Standort erfordert, dass das erste autonome Fahrzeug einen umständlichen Weg nimmt, um den ersten Standort zu erreichen,
Bestimmen, dass der erste Standort für das erste autonome Fahrzeug unzugänglich ist, und
Bestimmen, dass das Abholen des Benutzers am ersten Standort erfordert, dass das erste autonome Fahrzeug eine Ausweichroute von einem direkten Weg zwischen einem aktuellen Standort des ersten autonomen Fahrzeugs und einem durch den Benutzer spezifizierten Zielort nimmt.

14. Verfahren (4000) nach einem der vorstehenden Ansprüche, wobei der zweite Standort für Fahrzeuge zugänglicher ist als der erste Standort, und/oder das Navigieren zu dem zweiten Standort erfordert, dass das erste autonome Fahrzeug weniger, kürzere oder schnellere Ausweichrouten nimmt, um den Benutzer zu einem durch den Benutzer spezifizierten Zielort zu transportieren.

15. Verfahren (4000) nach einem der vorstehenden Ansprüche, ferner umfassend:
Empfangen (4510), am Computersystem, einer ersten Anforderung vom ersten Benutzer zur Verwendung von einem der autonomen Fahrzeuge, wobei die erste Anforderung mit einer ersten Prioritätsmetrik assoziiert ist;
Empfangen (4520), am Computersystem, einer zweiten Anforderung vom zweiten Benutzer zur Verwendung von einem der autonomen Fahrzeuge, wobei die zweite Anforderung mit einer zweiten Prioritätsmetrik assoziiert ist;
Bestimmen (4530), durch das Computersystem, dass die erste Prioritätsmetrik größer ist als die zweite Prioritätsmetrik; und
als Reaktion auf das Bestimmen, dass die erste Prioritätsmetrik größer ist als die zweite Prioritätsmetrik, Zuweisen (4540) eines autonomen Fahrzeugs zu dem ersten Benutzer vor dem Zuweisen eines autonomen Fahrzeugs zu dem zweiten Benutzer.

16. Erste Vorrichtung, umfassend:
einen oder mehrere Prozessoren; Speicher; und
ein oder mehrere Programme, die im Speicher gespeichert sind, wobei das eine oder die mehreren Programme Anweisungen zum Durchführen des Verfahrens (4000) nach einem der Ansprüche 1-15 beinhalten.

17. Nichtflüchtiges computerlesbares Speichermedium, das ein oder mehrere Programme zur Ausführung durch einen oder mehrere Prozessoren einer ersten Vorrichtung umfasst, wobei das eine oder die mehreren Programme Anweisungen beinhalten, die bei Ausführung durch den einen oder die mehreren Prozessoren die erste Vorrichtung zum Durchführen des Verfahrens (4000) nach einem der Ansprüche 1-15 veranlassen.

## Revendications

1. Procédé (4000), comprenant :
la réception (4010) de données télémétriques de véhicule au niveau d'un système informatique (1300), les données télémétriques de véhicule indiquant un endroit géographique respectif où se trouve chaque véhicule autonome d'une pluralité de véhicules autonomes (1302ad) ;
la réception (4020) de données de profil utilisateur au niveau du système informatique, les données de profil utilisateur indiquant un endroit géographique respectif où se trouve chaque utilisateur d'une pluralité d'utilisateurs (1306, 1800a-d, 2100a-d, 2304, 3000, 3400, 3702) ;
l'estimation (4030), au niveau du système informatique sur la base des données de profil utilisateur, d'une ou de plusieurs futures requêtes, par un ou plusieurs des utilisateurs, d'utilisation d'un ou de plusieurs des véhicules autonomes, chaque future requête estimée étant associée à un endroit géographique respectif et à une heure respective ; et
la transmission (4040), depuis le système informatique, d'un ou de plusieurs signaux de commande à un ou plusieurs des véhicules autonomes sur la base des une ou plusieurs futures requêtes estimées, chaque signal de commande comprenant des instructions données à un véhicule autonome respectif de naviguer jusqu'à un endroit géographique respectif à une heure respective ;
ledit procédé étant **caractérisé en ce qu'**il comprend en outre :
la réception (4410), au niveau du système informatique, d'une requête (3002), émanant d'un premier utilisateur, d'un premier véhicule autonome, la requête comprenant une indication d'un premier endroit où se trouve le premier utilisateur ;
la détermination (4420), par le système informatique, qu'une prise en charge de l'utilisateur à un deuxième endroit différent du premier endroit permet d'exploiter plus efficacement le premier véhicule autonome ;
conformément à la détermination, la transmission (4430), du système informatique au premier utilisateur, d'une indication (3004) du deuxième endroit ;
la réception (4440), au niveau du système informatique, depuis le premier utilisateur, d'une entrée (3006) par le premier utilisateur acceptant le deuxième endroit ; et
en réponse à la réception de l'entrée par le premier utilisateur :
la transmission (4450), du système informatique au premier véhicule autonome, d'un ou de plusieurs signaux de commande (3106) donnant instruction au premier véhicule autonome de naviguer jusqu'au deuxième endroit au lieu du premier endroit, et
la transmission (4460), du système informatique au premier utilisateur, d'une instruction de naviguer jusqu'au deuxième endroit pour une prise en charge par le premier véhicule autonome.

2. Procédé (4000) selon la revendication 1, les données télémétriques de véhicule comprenant une indication d'un ou de plusieurs éléments dans le groupe comprenant une vitesse d'un véhicule autonome de la pluralité de véhicules autonomes,
un endroit où se trouve un véhicule autonome de la pluralité de véhicules autonomes,
un cap d'un véhicule autonome de la pluralité de véhicules autonomes, et un parcours d'un véhicule autonome de la pluralité de véhicules autonomes.

3. Procédé (4000) selon l'une quelconque des revendications précédentes, les données de profil utilisateur comprenant un ou plusieurs éléments dans le groupe comprenant
une indication d'un endroit où se trouve un utilisateur de la pluralité d'utilisateurs,
une indication d'un historique de déplacements d'un utilisateur de la pluralité d'utilisateurs,
un ou plusieurs indicateurs démographiques d'un utilisateur de la pluralité d'utilisateurs,
une indication d'une préférence d'un utilisateur de la pluralité d'utilisateurs, et
une indication d'une tendance associée à un utilisateur de la pluralité d'utilisateurs.

4. Procédé (4000) selon l'une quelconque des revendications précédentes, les un ou plusieurs signaux de commande comprenant des instructions données à un véhicule autonome de la pluralité de véhicules autonomes de naviguer jusqu'à un ou plusieurs éléments dans le groupe comprenant
un endroit associé à un utilisateur de la pluralité d'utilisateurs, un endroit d'attente,
une région géographique différente d'une région géographique actuelle du véhicule autonome,
un endroit associé à un colis, et un endroit associé à une station de charge électrique.

5. Procédé (4000) selon l'une quelconque des revendications précédentes, les une ou plusieurs futures requêtes étant estimées sur la base d'un ou de plusieurs éléments dans le groupe comprenant
un modèle prédictif d'une future demande d'utilisation d'un ou de plusieurs des véhicules autonomes, des informations d'événements indiquant la survenance ou la survenance prédite d'un ou de plusieurs événements, et une demande actuelle d'utilisation d'un ou de plusieurs des véhicules autonomes.

6. Procédé (4000) selon l'une quelconque des revendications précédentes, les un ou plusieurs signaux de commande comprenant des instructions données à un premier véhicule autonome de transporter un premier utilisateur le long d'un premier tronçon d'un parcours jusqu'à une destination requise par le premier utilisateur, et le procédé (4100) comprenant en outre la transmission (4110), depuis le système informatique, d'instructions données au premier utilisateur de naviguer sur un deuxième tronçon du parcours en utilisant un système de transport public.

7. Procédé (4000) selon la revendication 6, comprenant en outre la génération (4120) d'un itinéraire de déplacement pour le premier utilisateur, l'itinéraire de déplacement comportant des instructions données au premier utilisateur de naviguer sur le premier tronçon du parcours en utilisant le premier véhicule autonome, et des instructions données au premier utilisateur de naviguer sur le deuxième tronçon du parcours en utilisant le système de transport public.

8. Procédé (4000) selon l'une quelconque des revendications précédentes, les un ou plusieurs signaux de commande comprenant des instructions (2302) données à un premier véhicule autonome d'attendre à un premier endroit ; et
le procédé (4000) comprenant en outre :
la réception (4210), au niveau du système informatique, d'une requête (2306), par un premier utilisateur, d'utilisation du premier véhicule autonome au premier endroit, et
en réponse à la réception de la requête par le premier utilisateur, l'assignation (4220) du premier véhicule autonome au premier utilisateur.

9. Procédé (4000) selon l'une quelconque des revendications précédentes, comprenant en outre : la réception (4310), au niveau du système informatique, d'une requête, par un premier utilisateur, d'utilisation d'un véhicule autonome ;
l'estimation (4320), au niveau du système informatique, d'une première durée associée à l'assignation d'un premier véhicule autonome de la pluralité de véhicules autonomes pour une utilisation exclusive par le premier utilisateur et l'exécution de la requête au moyen du premier véhicule autonome ;
l'estimation (4320), au niveau du système informatique, d'une deuxième durée associée à l'assignation d'un deuxième véhicule autonome de la pluralité de véhicules autonomes pour une utilisation partagée entre le premier utilisateur et un ou plusieurs utilisateurs supplémentaires et l'exécution de la requête au moyen du deuxième véhicule autonome ; et
la transmission (4330), au moyen du système informatique, d'une indication de la première durée et de la deuxième durée à l'utilisateur.

10. Procédé (4000) selon la revendication 9, comprenant en outre :
la réception (4340), au niveau du système informatique, d'une entrée émanant du premier utilisateur sélectionnant soit le premier véhicule autonome, soit le deuxième véhicule autonome ; et
en réponse à la réception de l'entrée émanant du premier utilisateur, l'assignation (4350) du premier véhicule autonome ou du deuxième véhicule autonome sélectionné pour exécuter la requête.

11. Procédé (4000) selon l'une quelconque des revendications précédentes, comprenant en outre :
la détermination, par le système informatique, qu'un premier véhicule autonome est en train de transporter un premier utilisateur jusqu'à une première destination requise par le premier utilisateur ;
la détermination, par le système informatique, qu'une navigation jusqu'à une deuxième destination différente de la première destination permet une exploitation plus efficace du premier véhicule autonome ;
la transmission, du système informatique au premier véhicule autonome, d'une indication (3404) de la deuxième destination en vue de son affichage au premier utilisateur ;
la réception, au niveau du système informatique depuis le premier véhicule autonome, d'une entrée (3406) par le premier utilisateur acceptant la deuxième destination ; et
en réponse à la réception de l'entrée par le premier utilisateur, la transmission, du système informatique au premier véhicule autonome, d'un ou de plusieurs signaux de commande (3408) donnant instruction au premier véhicule autonome de naviguer jusqu'à la deuxième destination au lieu de la première destination.

12. Procédé (4000) selon la revendication 11, comprenant en outre :
la détermination qu'un premier endroit de dépose correspondant à la première destination est dangereux ou inadapté pour l'utilisateur, de préférence le premier endroit de dépose étant un endroit parmi un endroit proche d'un volume important de circulation de véhicules, un endroit sans zone de prise en charge désignée, et un endroit proche d'un flux de circulation rapide ;
la détermination d'un endroit de dépose de substitution au premier endroit, l'endroit de dépose de substitution étant plus sûr ou plus adapté pour l'utilisateur ; et
la sélection, comme deuxième destination, de l'endroit de dépose de substitution.

13. Procédé (4000) selon l'une quelconque des revendications précédentes, la détermination (4420), par le système informatique, qu'une prise en charge de l'utilisateur au deuxième endroit différent du premier endroit permet une exploitation plus efficace du premier véhicule autonome comprenant au moins un des éléments dans le groupe comprenant
la détermination qu'une prise en charge de l'utilisateur au premier endroit nécessite que le premier véhicule autonome emprunte un chemin peu pratique pour atteindre le premier endroit,
la détermination que le premier endroit est inaccessible par le premier véhicule autonome, et
la détermination qu'une prise en charge au premier endroit nécessite que le premier véhicule autonome effectue un détour par rapport à un chemin direct entre un endroit actuel où se trouve le premier véhicule autonome et une destination indiquée par l'utilisateur.

14. Procédé (4000) selon l'une quelconque des revendications précédentes, le deuxième endroit étant plus accessible à des véhicules que le premier endroit et/ou la navigation jusqu'au deuxième endroit nécessitant que le premier véhicule autonome effectue des détours en moins grand nombre, plus courts, ou plus rapides pour acheminer l'utilisateur jusqu'à une destination indiquée par l'utilisateur.

15. Procédé (4000) selon l'une quelconque des revendications précédentes, comprenant en outre :
la réception (4510), au niveau du système informatique, d'une première requête, émanant d'un premier utilisateur, d'utilisation d'un des véhicules autonomes, la première requête étant associée à une première métrique de priorité ;
la réception (4520), au niveau du système informatique, d'une deuxième requête, émanant d'un deuxième utilisateur, d'utilisation d'un des véhicules autonomes, la deuxième requête étant associée à une deuxième métrique de priorité ;
la détermination (4530), par le système informatique, que la première métrique de priorité est supérieure à la deuxième métrique de priorité ; et
en réponse à la détermination que la première métrique de priorité est supérieure à la deuxième métrique de priorité, l'assignation (4540) d'un véhicule autonome au premier utilisateur avant l'assignation d'un véhicule autonome au deuxième utilisateur.

16. Premier dispositif, comprenant :
un ou plusieurs processeur ; une mémoire ; et
un ou plusieurs programmes stockés dans la mémoire, les un ou plusieurs programmes comportant des instructions pour réaliser le procédé (4000) selon l'une quelconque des revendications 1 à 15.

17. Support de stockage non transitoire lisible par ordinateur comprenant un ou plusieurs programmes à exécuter par un ou plusieurs processeurs d'un premier dispositif, les un ou plusieurs programmes comportant des instructions qui, lorsqu'elles sont exécutées par les un ou plusieurs processeurs, amènent le premier dispositif à réaliser le procédé (4000) selon l'une quelconque des revendications 1 à 15.
